(19) 

Europäisches
Patentamt
European
Patent Office
Office européen
des brevets

(11) **EP 4 583 123 A1**

(12) **EUROPEAN PATENT APPLICATION**
published in accordance with Art. 153(4) EPC

(43) Date of publication:
**09.07.2025 Bulletin 2025/28**

(21) Application number: **23860174.4**

(22) Date of filing: **24.08.2023**

(51) International Patent Classification (IPC):
*H01B 1/06* [(2006.01)]  *C01B 25/455* [(2006.01)]
*H01B 1/10* [(2006.01)]  *H01G 11/56* [(2013.01)]
*H01M 10/052* [(2010.01)]  *H01M 10/0562* [(2010.01)]

(52) Cooperative Patent Classification (CPC):
**C01B 25/455; H01B 1/06; H01B 1/10; H01G 11/56;
H01M 10/052; H01M 10/0562;** Y02E 60/10

(86) International application number:
**PCT/JP2023/030490**

(87) International publication number:
**WO 2024/048411 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.08.2022 JP 2022136333
27.01.2023 JP 2023011374**

(71) Applicant: **GS Yuasa International Ltd.
Kisshoin, Minami-ku,
Kyoto-shi, Kyoto 601-8520 (JP)**

(72) Inventors:
• **FUKUSHIMA, Akihiro
Kyoto-shi, Kyoto 601-8520 (JP)**
• **NISHII, Katsuya
Kyoto-shi, Kyoto 601-8520 (JP)**
• **EZURA, Yoshinobu
Kyoto-shi, Kyoto 601-8520 (JP)**

(74) Representative: **Isarpatent
Patent- und Rechtsanwälte
Barth Hassa Peckmann & Partner mbB
Friedrichstraße 31
80801 München (DE)**

(54) **SOLID ELECTROLYTE AND POWER STORAGE ELEMENT**

(57)    A solid electrolyte according to one aspect of the present invention contains a lithium element, a phosphorus element, a sulfur element, a halogen element, and an aluminum element, has a crystal structure, and satisfies both of the following formulas (a1) and (b1) or both of the following formulas (a2) and (b2).

$$2.89 < [\text{Li/P}] \cdot [\text{X/P}] \leq 3.15 \quad \cdots (\text{a1})$$

$$0.01 \leq [\text{Al/P}] \leq 0.10 \quad \cdots (\text{b1})$$

$$2.84 < [\text{Li/P}] \cdot [\text{X/P}] \leq 2.89 \quad \cdots (\text{a2})$$

$$0.02 \leq [\text{Al/P}] \leq 0.10 \quad \cdots (\text{b2})$$

In the formulas (a1), (b1), (a2), and (b2), [Li/P] is a molar ratio of the content of the lithium element to the content of the phosphorus element, [X/P] is a molar ratio of the content of the halogen element to the content of the phosphorus element, and [Al/P] is a molar ratio of the content of the aluminum element to the content of the phosphorus element.

Fig. 3

**Description**

TECHNICAL FIELD

The present invention relates to a solid electrolyte and an energy storage device.

BACKGROUND ART

Nonaqueous electrolyte secondary batteries typified by lithium ion secondary batteries are widely used in electronic devices such as personal computers and communication terminals, motor vehicles, and the like since these secondary batteries have a high energy density. The nonaqueous electrolyte secondary batteries generally include an electrode assembly having a pair of electrodes and a separator; a nonaqueous electrolyte; and a case that houses these electrodes and nonaqueous electrolyte, and are configured to allow charge transport ions to be transferred between the two electrodes for charge-discharge. Capacitors such as lithium ion capacitors and electric double layer capacitors are also widely used as nonaqueous electrolyte energy storage devices other than the nonaqueous electrolyte secondary batteries.

In recent years, an energy storage device has been proposed in which a solid electrolyte such as a sulfide solid electrolyte is used as a nonaqueous electrolyte in place of a nonaqueous electrolyte solution in which an electrolyte salt is dissolved in a liquid such as an organic solvent. Patent Document 1 describes a sulfide solid electrolyte containing a lithium element, a phosphorus element, and a sulfur element and having a crystal structure.

PRIOR ART DOCUMENT

PATENT DOCUMENT

Patent Document 1: JP-A-2005-228570

SUMMARY OF THE INVENTION

PROBLEMS TO BE SOLVED BY THE INVENTION

In a solid electrolyte, it is important that ionic conductivity is high in order to improve the output of an energy storage device. Also in the sulfide solid electrolyte containing a lithium element, a phosphorus element, and a sulfur element as described in Patent Document 1, a material having higher ionic conductivity is required.

An object of the present invention is to provide a solid electrolyte having high ionic conductivity, and an energy storage device using such a solid electrolyte.

MEANS FOR SOLVING THE PROBLEMS

A solid electrolyte according to one aspect of the present invention contains a lithium element, a phosphorus element, a sulfur element, a halogen element, and an aluminum element, has a crystal structure, and satisfies both of the following formulas (a1) and (b1) or both of the following formulas (a2) and (b2).

$$2.89 < [\text{Li/P}] \cdot [\text{X/P}] \leq 3.15 \quad \cdots (\text{a1})$$

$$0.01 \leq [\text{Al/P}] \leq 0.10 \quad \cdots (\text{b1})$$

$$2.84 < [\text{Li/P}] \cdot [\text{X/P}] \leq 2.89 \quad \cdots (\text{a2})$$

$$0.02 \leq [\text{Al/P}] \leq 0.10 \quad \cdots (\text{b2})$$

In the formulas (a1), (b1), (a2), and (b2), [Li/P] is a molar ratio of the content of the lithium element to the content of the phosphorus element, [X/P] is a molar ratio of the content of the halogen element to the content of the phosphorus element, and [Al/P] is a molar ratio of the content of the aluminum element to the content of the phosphorus element.

An energy storage device according to another aspect of the present invention contains the solid electrolyte.

ADVANTAGES OF THE INVENTION

According to any one aspect of the present invention, it is possible to provide a solid electrolyte having high ionic conductivity and an energy storage device using such a solid electrolyte.

BRIEF DESCRIPTION OF THE DRAWINGS

Fig. 1 is a schematic cross-sectional view of an all-solid-state battery as an embodiment of an energy storage device of the present invention.
Fig. 2 is a schematic view illustrating an energy storage apparatus composed of a plurality of assembled energy storage devices according to an embodiment of the present invention.
Fig. 3 is a scatter diagram showing a relationship between values of [Li/P] - [X/P] and [Al/P] and ionic conductivity in Examples 1 to 9 and Comparative Examples 1 to 6.

MODE FOR CARRYING OUT THE INVENTION

First, an outline of a solid electrolyte and energy storage device disclosed in the present specification will be described.
[1] A solid electrolyte according to one aspect of the present invention contains a lithium element, a phosphorus element, a sulfur element, a halogen element, and an aluminum element, has a crystal structure, and satisfies both of the following formulas (a1) and (b1) or both of the following formulas (a2) and (b2).

$$2.89 < [\text{Li/P}] \cdot [\text{X/P}] \leq 3.15 \quad \cdots (\text{a1})$$

$$0.01 \leq [\text{Al/P}] \leq 0.10 \quad \cdots (\text{b1})$$

$$2.84 < [\text{Li/P}] \cdot [\text{X/P}] \leq 2.89 \quad \cdots (\text{a2})$$

$$0.02 \leq [\text{Al/P}] \leq 0.10 \quad \cdots (\text{b2})$$

In the formulas (a1), (b1), (a2), and (b2), [Li/P] is a molar ratio of the content of the lithium element to the content of the phosphorus element, [X/P] is a molar ratio of the content of the halogen element to the content of the phosphorus element, and [Al/P] is a molar ratio of the content of the aluminum element to the content of the phosphorus element.
The solid electrolyte according to [1] has high ionic conductivity. The reasons therefor are not clear, but the following factors are presumed. The halogen element is considered to be an element that contributes to the formation of a crystal structure having high ionic conductivity in a solid electrolyte containing a lithium element, a phosphorus element, and a sulfur element. [Li/P] - [X/P] in the formulas (a1) and (a2) is an index of the content of the lithium element that is considered not to be bonded to the halogen element. It is considered that by containing a predetermined amount of the lithium element not bonded to the halogen element, the content of the lithium element likely to contribute to ion conduction can be appropriately increased while maintaining the ease of forming a crystal structure having high ionic conductivity. It is considered that when a predetermined amount of aluminum element is contained in such a crystal structure having high ionic conductivity, the ionic conductivity is further improved by a change in the crystal structure. In particular, when the content of the lithium element considered not to be bonded to the halogen element is relatively small as represented by the formula (a2), a sufficient crystal structure change occurs and the ionic conductivity is sufficiently improved by relatively increasing the content of the aluminum element as represented by the formula (b2). For these reasons, it is presumed that the solid electrolyte according to [1], which further contains a halogen element and an aluminum element in a conventional solid electrolyte containing a lithium element, a phosphorus element, and a sulfur element and having a crystal structure and satisfies both of the formulas (a1) and (b1) or both of the formulas (a2) and (b2), has an increased ionic conductivity.
Incidentally, when a boron element is contained in a sulfide solid electrolyte containing no phosphorus element such as $Li_2S$, an effect of improving the ionic conductivity may appear due to a lithium element defect caused by containing the boron element. However, since the solid electrolyte containing a lithium element, a phosphorus element, and a sulfur element contains the phosphorus element, lithium element defects already exist as compared to $Li_2S$. Therefore, it is considered that the solid electrolyte containing a lithium element, a phosphorus element, and a sulfur element does not sufficiently exhibit the effect of improving the ionic conductivity due to the lithium element defect caused by containing the boron element.

It can be confirmed by powder X-ray diffraction measurement that the solid electrolyte "has a crystal structure". That is, "having a crystal structure" means that a peak derived from the crystal structure of the solid electrolyte is observed in an X-ray diffraction diagram obtained by powder X-ray diffraction measurement. The solid electrolyte may contain an amorphous part. The powder X-ray diffraction measurement is performed by the following procedure. An airtight sample holder for X-ray diffraction measurement is filled with a solid electrolyte powder to be measured in an argon atmosphere having a dew point of -50°C or lower. Powder X-ray diffraction measurement is performed using an X-ray diffractometer ("MiniFlex II" from Rigaku Corporation). With a CuK$\alpha$ ray used as a radiation source, and at a tube voltage of 30 kV and a tube current of 15 mA, the diffracted X-ray is allowed to pass through a K$\beta$ filter of 30 $\mu$m in thickness, and detected by a high-speed one-dimensional detector (model number: D/teX Ultra 2). The sampling width, scanning speed, divergence slit width, light receiving slit width, and scattering slit width are set to be respectively 0.01°, 5°/min, 0.625°, 13 mm (OPEN), and 8 mm. In the present invention, the "X-ray diffraction diagram using CuK$\alpha$ rays" means an X-ray diffraction diagram obtained by the above-described powder X-ray diffraction measurement.

[2] The solid electrolyte according to [1] may not contain a boron element, or may further contain a boron element, and the molar content of the boron element may be smaller than the molar content of the aluminum element.

The solid electrolyte according to [2] has higher ionic conductivity. As described above, even if the boron element is introduced into the solid electrolyte containing a lithium element, a phosphorus element, and a sulfur element, the effect of improving the ionic conductivity is not sufficiently achieved. Therefore, in the solid electrolyte according to [2], it is presumed that the absence or low content of the boron element allows the essential elements to function effectively and suppresses excessive generation of lithium element defects, thereby leading to further increase in ionic conductivity.

[3] The solid electrolyte according to [1] or [2] may further contain a nitrogen element.

The solid electrolyte according to [3] tends to have higher ionic conductivity. The reason for this is also unclear, but it is presumed that, when a nitrogen element is contained, a route favorable for lithium ion conduction is formed within the crystal structure, among other possible factors.

[4] The solid electrolyte according to [3] may satisfy both of the following formulas (a3) and (b3).

$$2.92 \leq [\text{Li/P}] \cdot [\text{X/P}] \leq 3.07 \quad \cdots (\text{a3})$$

$$0.01 \leq [\text{Al/P}] \leq 0.07 \quad \cdots (\text{b3})$$

The solid electrolyte according to [4] has higher ionic conductivity.

[5] The solid electrolyte according to any one of [1] to [4] may be represented by the following formula (1).

$$\text{Li}_a\text{Al}_b\text{Zn}_c\text{PS}_d\text{N}_e\text{X}_f\text{Y}_g \cdots \quad (1)$$

In the formula (1), X is a halogen element, and Y is an element other than a lithium element, an aluminum element, a zinc element, a phosphorus element, a sulfur element, a nitrogen element, and a halogen element, and a, b, c, d, e, f, and g are numerical values that give a stoichiometric ratio, a is a numerical value satisfying $3.00 \leq a \leq 4.00$, b is a numerical value satisfying $0.01 \leq b \leq 0.10$, c is a numerical value satisfying $0.00 \leq c < 0.10$, d is a numerical value satisfying $3.50 \leq d \leq 4.50$, e is a numerical value satisfying $0.00 \leq e \leq 0.30$, f is a numerical value satisfying $0.10 \leq f \leq 1.00$, and g is a numerical value satisfying $0.00 \leq g \leq 0.04$.

The solid electrolyte according to [5] has higher ionic conductivity.

[6] The solid electrolyte according to any one of [1] to [5] may satisfy both of the following formulas (a4) and (b4).

$$2.94 \leq [\text{Li/P}] \cdot [\text{X/P}] \leq 3.05 \quad \cdots (\text{a4})$$

$$0.01 \leq [\text{Al/P}] \leq 0.06 \quad \cdots (\text{b4})$$

The solid electrolyte according to [6] has higher ionic conductivity.

[7] The solid electrolyte according to any one of [1] to [6] may satisfy both of the following formulas (a5) and (b5), both of the following formulas (a6) and (b6), or both of the following formulas (a7) and (b7).

$$3.05 < [Li/P] - [X/P] \leq 3.15 \quad \cdots (a5)$$

$$0.03 \leq [Al/P] \leq 0.08 \quad \cdots (b5)$$

$$2.91 < [Li/P] - [X/P] \leq 3.05 \quad \cdots (a6)$$

$$0.01 \leq [Al/P] \leq 0.10 \quad \cdots (b6)$$

$$2.84 < [Li/P] - [X/P] \leq 2.91 \quad \cdots (a7)$$

$$0.03 \leq [Al/P] \leq 0.08 \quad \cdots (b7)$$

The solid electrolyte according to [7] has higher ionic conductivity.
[8] The solid electrolyte according to any one of [1] to [7] may satisfy both of the following formulas (a8) and (b8), both of the following formulas (a9) and (b9), or both of the following formulas (a10) and (b10).

$$3.00 < [Li/P] - [X/P] \leq 3.15 \quad \cdots (a8)$$

$$0.04 \leq [Al/P] \leq 0.07 \quad \cdots (b8)$$

$$2.93 < [Li/P] - [X/P] \leq 3.00 \quad \cdots (a9)$$

$$0.01 \leq [Al/P] \leq 0.09 \quad \cdots (b9)$$

$$2.84 < [Li/P] - [X/P] \leq 2.93 \quad \cdots (a10)$$

$$0.04 \leq [Al/P] \leq 0.07 \quad \cdots (b10)$$

The solid electrolyte according to [8] has higher ionic conductivity.
[9] The solid electrolyte according to any one of [1] to [8] may satisfy both of the following formulas (a11) and (b11).

$$2.87 < [Li/P] - [X/P] \leq 3.06 \quad \cdots (a11)$$

$$0.03 \leq [Al/P] \leq 0.08 \quad \cdots (b11)$$

The solid electrolyte according to [9] has higher ionic conductivity.
[10] The solid electrolyte according to any one of [1] to [9] may satisfy all of the following formulas (b12), (c12), and (d12).

$$0.01 \leq [Al/P] \leq 0.03 \quad \cdots (b12)$$

$$[Li/P] - [X/P] \leq 5.00 \times [Al/P] + 2.91 \quad \cdots (c12)$$

$$[Li/P] - [X/P] \geq \text{-}3.50 \times [Al/P] + 2.98 \quad \cdots (d12)$$

The solid electrolyte according to [10] has higher ionic conductivity.
[11] The solid electrolyte according to any one of [1] to [10] may satisfy all of the following formulas (b13), (c13), and (d13).

$$0.03 \leq [\mathrm{Al/P}] \leq 0.08 \quad \cdots (\mathrm{b}13)$$

$$[\mathrm{Li/P}] \cdot [\mathrm{X/P}] \leq 3.50 \times [\mathrm{Al/P}] + 2.96 \quad \cdots (\mathrm{c}13)$$

$$[\mathrm{Li/P}] \cdot [\mathrm{X/P}] \leq \text{-}2.33 \times [\mathrm{Al/P}] + 3.25 \quad \cdots (\mathrm{d}13)$$

The solid electrolyte according to [11] has higher ionic conductivity.

[12] The solid electrolyte according to any one of [1] to [11] may satisfy both of the following formulas (a14) and (b14).

$$2.97 \leq [\mathrm{Li/P}] \cdot [\mathrm{X/P}] \leq 3.06 \quad \cdots (\mathrm{a}14)$$

$$0.01 \leq [\mathrm{Al/P}] \leq 0.05 \quad \cdots (\mathrm{b}14)$$

The solid electrolyte according to [12] has higher ionic conductivity. Also, in the solid electrolyte according to [12], when the lowest crystallization temperature among a plurality of crystallization temperatures existing in a range of 150°C or higher and 400°C or lower is denoted by T1 [°C], the crystallization temperature T1 decreases. Thereby, the productivity of the solid electrolyte according to [12] is improved.

[13] The solid electrolyte according to any one of [1] to [12] may satisfy all of the following formulas (a15), (b15), and (c15).

$$2.97 \leq [\mathrm{Li/P}] \cdot [\mathrm{X/P}] \leq 3.06 \quad \cdots (\mathrm{a}15)$$

$$0.01 \leq [\mathrm{Al/P}] \leq 0.03 \quad \cdots (\mathrm{b}15)$$

$$[\mathrm{Li/P}] \cdot [\mathrm{X/P}] \leq 5.00 \times [\mathrm{Al/P}] + 2.91 \quad \cdots (\mathrm{c}15)$$

The solid electrolyte according to [13] has higher ionic conductivity.

[14] The solid electrolyte according to any one of [1] to [13] may satisfy both of the following formulas (a16) and (b16).

$$2.97 \leq [\mathrm{Li/P}] \cdot [\mathrm{X/P}] \leq 3.06 \quad \cdots (\mathrm{a}16)$$

$$0.03 \leq [\mathrm{Al/P}] \leq 0.05 \quad \cdots (\mathrm{b}16)$$

The solid electrolyte according to [14] has higher ionic conductivity.

[15] The solid electrolyte according to any one of [1] to [14] may contain both a bromine element and an iodine element as halogen elements, and the molar ratio [Br/P] of the content of the bromine element to the content of the phosphorus element may be 0.05 or more and 0.50 or less.

The solid electrolyte according to [15] has higher ionic conductivity.

[16] The solid electrolyte according to any one of [1] to [15] may contain both a bromine element and an iodine element as halogen elements, and the molar ratio [I/P] of the content of the iodine element to the content of the phosphorus element may be 0.05 or more and 0.50 or less.

The solid electrolyte according to [16] has higher ionic conductivity.

[17] In the solid electrolyte according to any one of [1] to [16], the molar ratio [S/P] of the content of the sulfur element to the content of the phosphorus element may be 3.50 or more and 4.50 or less.

The solid electrolyte according to [17] has higher ionic conductivity.

[18] In the solid electrolyte according to any one of [1] to [17], the molar ratio [N/P] of the content of the nitrogen element to the content of the phosphorus element may be 0.01 or more and 0.25 or less.

The solid electrolyte according to [18] has higher ionic conductivity.

[19] The solid electrolyte according to any one of [1] to [18] may further contain a zinc element, and the molar ratio [Zn/P] of the content of the zinc element to the content of the phosphorus element may be 0.001 or more and 0.05 or less.

The solid electrolyte according to [19] has higher ionic conductivity.

[20] The solid electrolyte according to any one of [1] to [19] may satisfy both of the following formulas (a17) and (b17).

$$2.97 \leq [\text{Li/P}] \cdot [\text{X/P}] \leq 3.06 \quad \cdots (\text{a}17)$$

$$0.05 \leq [\text{Al/P}] \leq 0.08 \quad \cdots (\text{b}17)$$

In the solid electrolyte according to [20], when the lowest crystallization temperature among a plurality of crystallization temperatures existing in a range of 150°C or higher and 400°C or lower is denoted by T1 [°C] and the highest crystallization temperature among the plurality of crystallization temperatures is denoted by T2 [°C], the difference T2-T1 between the crystallization temperature T1 and the crystallization temperature T2 increases. Thereby, the productivity of the solid electrolyte according to [20] is improved.

[21] The solid electrolyte according to any one of [1] to [20] may satisfy all of the following formulas (b18), (c18), and (d18).

$$0.01 \leq [\text{Al/P}] \leq 0.05 \quad \cdots (\text{b}18)$$

$$[\text{Li/P}] \cdot [\text{X/P}] \geq \text{-}4.00 \times [\text{Al/P}] + 3.01 \quad \cdots (\text{c}18)$$

$$[\text{Li/P}] \cdot [\text{X/P}] \geq 4.00 \times [\text{Al/P}] + 2.77 \quad \cdots (\text{d}18)$$

In the solid electrolyte according to [21], when the lowest crystallization temperature among a plurality of crystallization temperatures existing in a range of 150°C or higher and 400°C or lower is denoted by T1 [°C], the crystallization temperature T1 decreases. Thereby, the productivity of the solid electrolyte according to [21] is improved.

[22] The solid electrolyte according to any one of [1] to [21] may satisfy both of the following formulas (a19) and (b19).

$$2.97 \leq [\text{Li/P}] \cdot [\text{X/P}] \leq 3.15 \quad \cdots (\text{a}19)$$

$$0.01 \leq [\text{Al/P}] \leq 0.08 \quad \cdots (\text{b}19)$$

In the solid electrolyte according to [22], when the lowest crystallization temperature among a plurality of crystallization temperatures existing in a range of 150°C or higher and 400°C or lower is denoted by T1 [°C], the crystallization temperature T1 decreases. Thereby, the productivity of the solid electrolyte according to [22] is improved.

[23] An energy storage device according to another aspect of the present invention contains the solid electrolyte according to any one of [1] to [22].

The energy storage device according to [23] contains a solid electrolyte having high ionic conductivity. Therefore, the energy storage device according to [23] has good charge-discharge performance.

A solid electrolyte, a method for producing a solid electrolyte, an energy storage device, a method for producing an energy storage device, an energy storage apparatus according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

<Solid electrolyte>

(Crystal structure)

The solid electrolyte according to an embodiment of the present invention has a crystal structure. The crystal structure of the solid electrolyte is not particularly limited, but preferably includes at least one of a crystal structure having diffraction peaks at $2\theta$ of $19.9° \pm 0.5°$ and $29.3° \pm 0.5°$ in an X-ray diffraction diagram using a CuK$\alpha$ ray (High Ion

Conduction Phase: HICP) and a crystal structure having diffraction peaks at a diffraction angle $2\theta$ of $21.0° \pm 0.5°$ and $28.0° \pm 0.5°$ in the X-ray diffraction diagram (Low Ion Conduction Phase: LICP), and more preferably includes HICP.

Both HICP and LICP exhibit relatively high ionic conductivity, and the ionic conductivity of HICP is higher. Therefore, when the solid electrolyte has such a crystal structure, the ionic conductivity is further enhanced.

The solid electrolyte may have a crystal structure other than HICP and LICP. Examples of the crystal structure other than HICP and LICP include $\beta$-$Li_3PS_4$, LGPS type, argyrodite type, $Li_7P_3S_{11}$, and Thio-LISICON type. The solid electrolyte may include an amorphous portion.

The solid electrolyte preferably has a plurality of crystallization temperatures within a range of 150°C or higher and 400°C or lower, and when the lowest crystallization temperature among the plurality of crystallization temperatures is denoted by T1 [°C] and the highest crystallization temperature among the plurality of crystallization temperatures is denoted by T2 [°C], a difference T2-T1 between the crystallization temperature T1 and the crystallization temperature T2 is 50°C or higher. When a heat treatment is performed during the production of the solid electrolyte, HICP can be precipitated. It is considered that HICP undergoes a phase transition to LICP as well heat treatment temperature is increased, and undergoes a phase transition to $\beta$-$Li_3PS_4$ or the like when the heat treatment temperature is further increased. The crystallization temperature T1 means the precipitation temperature of HICP or LICP. In the solid electrolyte, depending on its composition, LICP may be precipitated without precipitation of HICP during a heat treatment. Therefore, the crystallization temperature T1 means the precipitation temperature of HICP when HICP is precipitated, and means the precipitation temperature of LICP when HICP is not precipitated. The crystallization temperature T2 means the precipitation temperature or phase transition temperature of $\beta$-$Li_3PS_4$ or another crystal phase having low ionic conductivity. Therefore, in order to further increase the ionic conductivity of the solid electrolyte, the heat treatment temperature needs to be controlled within a temperature range in which HICP or LICP is precipitated and $\beta$-$Li_3PS_4$ or the like is hardly generated. Therefore, when the difference T2-T1 between the crystallization temperature T1 and the crystallization temperature T2 is 50°C or higher as described above, a temperature range in which the thermal stability of HICP or LICP is high can be widened. When the temperature range in which the high thermal stability of HICP or the like is high is wide, the productivity is improved. The lower limit of the difference T2-T1 between the crystallization temperature T1 and the crystallization temperature T2 is more preferably 60°C, still more preferably 70°C, even more preferably 80°C, and even more preferably 100°C. The upper limit of the difference T2-T1 between the crystallization temperature T1 and the crystallization temperature T2 can be, for example, 160°C, 150°C, 140°C, or 135°C. The difference T2-T1 between the crystallization temperature T1 and the crystallization temperature T2 can be, for example, 60°C or higher and 160°C or lower, 70°C or higher and 150°C or lower, 80°C or higher and 140°C or lower, or 100°C or higher and 135°C or lower.

The upper limit of the crystallization temperature T1 is preferably 195°C, and more preferably 190°C. The lower limit of the crystallization temperature T1 can be, for example, 170°C or 180°C. The crystallization temperature T1 can be, for example, 170°C or higher and 195°C or lower, or 180°C or higher and 190°C or lower. When the solid electrolyte has such a crystallization temperature T1, HICP or LICP is precipitated at a low heat treatment temperature, and the productivity is improved.

The "crystallization temperature" of the solid electrolyte is determined by measurement with a differential scanning calorimeter (DSC) according to the following procedure. In an argon atmosphere having a dew point of -50°C or lower, a sample powder to be measured (a solid electrolyte before the heat treatment of a composition or the like prepared in the method for producing a solid electrolyte) is put in a stainless steel sealed pan, and then sealed using a dedicated jig. Differential scanning calorimetry is performed using a DSC apparatus ("Thermo Plus DSC 8230" from Rigaku Corporation). The temperature range is from room temperature to 400°C, and the temperature raising rate is 10°C/min.

(Composition)

The solid electrolyte contains a lithium element, a phosphorus element, a sulfur element, a halogen element, and an aluminum element.

Examples of the halogen element include a fluorine element, a chlorine element, a bromine element, and an iodine element, and a bromine element and an iodine element are preferable. One or two or more halogen elements can be used. The halogen element preferably includes both a bromine element and an iodine element.

With respect to the constituent elements of the solid electrolyte, when the difference [Li/P] - [X/P] between the molar ratio [Li/P] of the content of the lithium element to the content of the phosphorus element and the molar ratio [X/P] of the content of the halogen element to the content of the phosphorus element is more than 2.89 and 3.15 or less, the molar ratio [Al/P] of the content of the aluminum element to the content of the phosphorus element is 0.01 or more and 0.10 or less. That is, when the following formula (a1) is satisfied, the following formula (b1) is satisfied.

$$2.89 < [\text{Li/P}] \cdot [\text{X/P}] \leq 3.15 \quad \cdots (\text{a1})$$

$$0.01 \leq [Al/P] \leq 0.10 \quad \cdots (b1)$$

When [Li/P] - [X/P] is more than 2.89 and 3.15 or less, the molar ratio [Al/P] is preferably 0.01 or more and 0.08 or less, more preferably 0.01 or more and 0.07 or less, and may be still more preferably 0.02 or more and 0.06 or less. When [Li/P] - [X/P] is more than 2.89 and 3.15 or less, the molar ratio [Al/P] is within the above range, thereby an appropriate crystal structure change due to the aluminum element occurs, and the ionic conductivity is improved.

When [Li/P] - [X/P] is more than 2.84 and 2.89 or less, the molar ratio [Al/P] of the content of the aluminum element to the content of the phosphorus element is 0.02 or more and 0.10 or less. That is, when the following formula (a2) is satisfied, the following formula (b2) is satisfied.

$$2.84 < [Li/P] - [X/P] \leq 2.89 \quad \cdots (a2)$$

$$0.02 \leq [Al/P] \leq 0.10 \quad \cdots (b2)$$

When [Li/P] - [X/P] is more than 2.84 and 2.89 or less, the molar ratio [Al/P] is preferably 0.03 or more and 0.08 or less, more preferably 0.04 or more and 0.07 or less, and still more preferably 0.05 or more and 0.06 or less. When [Li/P] - [X/P] is more than 2.84 and 2.89 or less, the molar ratio [Al/P] is within the above range, thereby an appropriate crystal structure change due to the aluminum element occurs, and the ionic conductivity is improved.

In the relationship between [Li/P] - [X/P] and [Al/P], it is preferable to satisfy both of the following formulas (a3) and (b3).

$$2.92 \leq [Li/P] - [X/P] \leq 3.07 \quad \cdots (a3)$$

$$0.01 \leq [Al/P] \leq 0.07 \quad \cdots (b3)$$

In the relationship between [Li/P] - [X/P] and [Al/P], it is more preferable to satisfy both of the following formulas (a4) and (b4).

$$2.94 \leq [Li/P] - [X/P] \leq 3.05 \quad \cdots (a4)$$

$$0.01 \leq [Al/P] \leq 0.06 \quad \cdots (b4)$$

When both of the formulas (a3) and (b3) are satisfied, and further when both of the formulas (a4) and (b4) are satisfied, the ionic conductivity of the solid electrolyte is further increased.

In the relationship between [Li/P] - [X/P] and [Al/P], it is also preferable to satisfy both of the following formulas (a5) and (b5), both of the following formulas (a6) and (b6), or both of the following formulas (a7) and (b7).

$$3.05 < [Li/P] - [X/P] \leq 3.15 \quad \cdots (a5)$$

$$0.03 \leq [Al/P] \leq 0.08 \quad \cdots (b5)$$

$$2.91 < [Li/P] - [X/P] \leq 3.05 \quad \cdots (a6)$$

$$0.01 \leq [Al/P] \leq 0.10 \quad \cdots (b6)$$

$$2.84 < [Li/P] - [X/P] \leq 2.91 \quad \cdots (a7)$$

$$0.03 \leq [Al/P] \leq 0.08 \quad \cdots (b7)$$

In the relationship between [Li/P] - [X/P] and [Al/P], it is more preferable to satisfy both of the following formulas (a8) and (b8), both of the following formulas (a9) and (b9), or both of the following formulas (a10) and (b 10).

$$3.00 < [Li/P] - [X/P] \leq 3.15 \quad \cdots(a8)$$

$$0.04 \leq [Al/P] \leq 0.07 \quad \cdots(b8)$$

$$2.93 < [Li/P] - [X/P] \leq 3.00 \quad \cdots(a9)$$

$$0.01 \leq [Al/P] \leq 0.09 \quad \cdots(b9)$$

$$2.84 < [Li/P] - [X/P] \leq 2.93 \quad \cdots(a10)$$

$$0.04 \leq [Al/P] \leq 0.07 \quad \cdots(b10)$$

When both of the formulas (a5) and (b5), both of the formulas (a6) and (b6), or both of the formulas (a7) and (b7) are satisfied, and when both of the formulas (a8) and (b8), both of the formulas (a9) and (b9), or both of the formulas (a10) and (b10) are satisfied, the ionic conductivity of the solid electrolyte is further increased.

In the relationship between [Li/P] - [X/P] and [Al/P], it is also preferable to satisfy both of the following formulas (a11) and (b11).

$$2.87 < [Li/P] - [X/P] \leq 3.06 \quad \cdots(a11)$$

$$0.03 \leq [Al/P] \leq 0.08 \quad \cdots(b11)$$

In the relationship between [Li/P] - [X/P] and [Al/P], it is also preferable to satisfy all of the following formulas (b12), (c12), and (d12).

$$0.01 \leq [Al/P] \leq 0.03 \quad \cdots(b12)$$

$$[Li/P] - [X/P] \leq 5.00 \times [Al/P] + 2.91 \quad \cdots(c12)$$

$$[Li/P] - [X/P] \geq -3.50 \times [Al/P] + 2.98 \quad \cdots(d12)$$

In the relationship between [Li/P] - [X/P] and [Al/P], it is also preferable to satisfy all of the following formulas (b13), (c13), and (d13).

$$0.03 \leq [Al/P] \leq 0.08 \quad \cdots(b13)$$

$$[Li/P] - [X/P] \leq 3.50 \times [Al/P] + 2.96 \quad \cdots(c13)$$

$$[Li/P] - [X/P] \leq -2.33 \times [Al/P] + 3.25 \quad \cdots(d13)$$

When both of the formulas (a11) and (b11) are satisfied, when all of the formulas (c12), (d12), and (b12) are satisfied, and when all of the formulas (c13), (d13), and (b13) are satisfied, the ionic conductivity of the solid electrolyte is further increased.

In the relationship between [Li/P] - [X/P] and [Al/P], it is also preferable to satisfy both of the following formulas (a14) and (b14).

$$2.97 \leq [Li/P] \cdot [X/P] \leq 3.06 \quad \cdots (a14)$$

$$0.01 \leq [Al/P] \leq 0.05 \quad \cdots (b14)$$

In the relationship between [Li/P] - [X/P] and [Al/P], it is also preferable to satisfy all of the following formulas (a15), (b15), and (c15).

$$2.97 \leq [Li/P] \cdot [X/P] \leq 3.06 \quad \cdots (a15)$$

$$0.01 \leq [Al/P] \leq 0.03 \quad \cdots (b15)$$

$$[Li/P] \cdot [X/P] \leq 5.00 \times [Al/P] + 2.91 \quad \cdots (c15)$$

In the relationship between [Li/P] - [X/P] and [Al/P], it is also preferable to satisfy both of the following formulas (a16) and (b16).

$$2.97 \leq [Li/P] \cdot [X/P] \leq 3.06 \quad \cdots (a16)$$

$$0.03 \leq [Al/P] \leq 0.05 \quad \cdots (b16)$$

When both of the formulas (a14) and (b14) are satisfied, when all of the formulas (a15), (b15), and (c15) are satisfied, and when both of the formulas (a16), and (b16) are satisfied, the ionic conductivity of the solid electrolyte is further increased.
In the relationship between [Li/P] - [X/P] and [Al/P], it is also preferable to satisfy both of the following formulas (a17) and (b17).

$$2.97 \leq [Li/P] \cdot [X/P] \leq 3.06 \quad \cdots (a17)$$

$$0.05 \leq [Al/P] \leq 0.08 \quad \cdots (b17)$$

When both of the formulas (a17) and (b17) are satisfied, the difference T2-T1 between the crystallization temperature T1 and the crystallization temperature T2 of the solid electrolyte becomes larger. Thereby, the productivity of the solid electrolyte is improved.
In the relationship between [Li/P] - [X/P] and [Al/P], it is also preferable to satisfy all of the following formulas (b18), (c18), and (d18).

$$0.01 \leq [Al/P] \leq 0.05 \quad \cdots (b18)$$

$$[Li/P] \cdot [X/P] \geq \text{-}4.00 \times [Al/P] + 3.01 \quad \cdots (c18)$$

$$[Li/P] \cdot [X/P] \geq 4.00 \times [Al/P] + 2.77 \quad \cdots (d18)$$

When all of the formulas (b18), (c18), and (d18) are satisfied, the crystallization temperature T1 decreases. Thereby, the productivity of the solid electrolyte is improved.
In the relationship between [Li/P] - [X/P] and [Al/P], it is also preferable to satisfy both of the following formulas (a19) and (b19).

$$2.97 \leq [Li/P] \cdot [X/P] \leq 3.15 \quad \cdots (a19)$$

$$0.01 \le [\text{Al/P}] \le 0.08 \quad \cdots (\text{b19})$$

When both of the formulas (a19) and (b19) are satisfied, the crystallization temperature T1 decreases. Thereby, the productivity of the solid electrolyte is improved.

[Li/P] - [X/P] is more than 2.84 and 3.15 or less, preferably more than 2.85 and 3.10 or less, more preferably more than 2.89 and 3.07 or less, still more preferably more than 2.90 and 3.05 or less, even more preferably 2.92 or more and 3.02 or less, and even more preferably 2.94 or more and 3.00 or less. [Li/P] - [X/P] is within the above range, thereby the content of the lithium element considered not to be bonded to the halogen element becomes appropriate, and the ionic conductivity of the solid electrolyte is further increased.

[Li/P] is preferably 3.00 or more and 4.00 or less, more preferably 3.20 or more and 3.90 or less, still more preferably 3.30 or more and 3.85 or less, even more preferably 3.40 or more and 3.80 or less, and even more preferably 3.45 or more and 3.75 or less.

[X/P] is preferably 0.10 or more and 1.00 or less, more preferably 0.20 or more and 0.90 or less, still more preferably 0.30 or more and 0.80 or less, and even more preferably 0.40 or more and 0.70 or less.

When both a bromine element and an iodine element are contained as halogen elements, the molar ratio [Br/P] of the content of the bromine element to the content of the phosphorus element is preferably 0.05 or more and 0.50 or less, more preferably 0.10 or more and 0.45 or less, still more preferably 0.15 or more and 0.40 or less, and even more preferably 0.20 or more and 0.35 or less.

When both a bromine element and an iodine element are contained as halogen elements, the molar ratio [I/P] of the content of the iodine element to the content of the phosphorus element is preferably 0.05 or more and 0.50 or less, more preferably 0.10 or more and 0.45 or less, still more preferably 0.15 or more and 0.40 or less, and even more preferably 0.20 or more and 0.35 or less.

[Al/P] is 0.01 or more and 0.10 or less. The lower limit of [Al/P] may be 0.02, 0.03, 0.04, or 0.05. The upper limit of [Al/P] may be 0.08, 0.07, 0.06, 0.05, 0.04, or 0.03. [Al/P] may be equal to or more than any of the lower limits and equal to or less than any of the upper limits.

The molar ratio [S/P] of the content of the sulfur element to the content of the phosphorus element is preferably 3.50 or more and 4.50 or less, more preferably 3.60 or more and 4.40 or less, and still more preferably 3.70 or more and 4.30 or less.

When [Li/P], [X/P], [Br/P], [I/P], [Al/P], or [S/P], which is the molar ratio of the content of the lithium element, the halogen element, the bromine element, the iodine element, the aluminum element, or the sulfur element to the content of the phosphorus element, is each in the above range, the state of crystal structure is improved, and the like, thereby the ionic conductivity is further increased.

The solid electrolyte preferably further contains a nitrogen element. The molar ratio [N/P] of the content of the nitrogen element to the content of the phosphorus element may be 0.00 or more and 0.30 or less, but is preferably 0.01 or more and 0.25 or less, more preferably 0.02 or more and 0.20 or less, and still more preferably 0.03 or more and 0.15 or less. When the solid electrolyte contains a nitrogen element and the content of the nitrogen element is within the above range, the ionic conductivity is further increased. In particular, the solid electrolyte further contains a nitrogen element, and when both of the formulas (a5) and (b5), both of the formulas (a6) and (b6), or both of the formulas (a7) and (b7) are satisfied, or when both of the formulas (a8) and (b8), both of the formulas (a9) and (b9), or both of the formulas (a10) and (b10) are satisfied, the ionic conductivity of the solid electrolyte is further increased.

The solid electrolyte may contain a zinc element. The molar ratio [Zn/P] of the content of the zinc element to the content of the phosphorus element is preferably 0.00 or more and less than 0.10, more preferably 0.001 or more and 0.05 or less, and still more preferably 0.005 or more and 0.03 or less.

The solid electrolyte may further contain elements (Y) other than a lithium element, a phosphorus element, a sulfur element, a halogen element, an aluminum element, a nitrogen element, and a zinc element. One or two or more other elements (Y) may be contained. However, the molar ratio [Y/P] of the total content of the other elements (Y) to the content of the phosphorus element is preferably 0.04 or less, and more preferably 0.03 or less, 0.02 or less, 0.01 or less, or 0.00. As described above, when the solid electrolyte does not contain the other elements (Y) or the content of the other elements (Y) is small, the essential element can function effectively, and the like, thereby the ionic conductivity is further increased.

The solid electrolyte preferably does not contain a boron element as the other element (Y), or even when the solid electrolyte contains a boron element, the molar content of the boron element is preferably smaller than the molar content of the aluminum element. That is, the molar ratio [B/Al] of the content of the boron element to the content of the aluminum element is preferably less than 1.00, and more preferably 0.50 or less, 0.30 or less, 0.20 or less, 0.10 or less, or 0.01 or less. [B/Al] may be 0.00 or more or 0.00. As described above, when the solid electrolyte does not contain a boron element or the content of the boron element is small, essential elements can function effectively, lithium element defects are suppressed from being excessively generated, and the like, thereby the ionic conductivity is further increased.

The solid electrolyte is preferably represented by the following formula (1).

$$Li_aAl_bZn_cPS_dN_eX_fY_g \cdots \qquad (1)$$

In the formula (1), X is a halogen element, and Y is an element other than a lithium element, an aluminum element, a zinc element, a phosphorus element, a sulfur element, a nitrogen element, and a halogen element, and a, b, c, d, e, f, and g are numerical values that give a stoichiometric ratio, a is a numerical value satisfying $3.00 \leq a \leq 4.00$, b is a numerical value satisfying $0.01 \leq b \leq 0.10$, c is a numerical value satisfying $0.00 \leq c < 0.10$, d is a numerical value satisfying $3.50 \leq d \leq 4.50$, e is a numerical value satisfying $0.00 \leq e \leq 0.30$, f is a numerical value satisfying $0.10 \leq f \leq 1.00$, and g is a numerical value satisfying $0.00 \leq g \leq 0.04$.

When the solid electrolyte has the composition represented by the formula (1), the ionic conductivity is further increased. The suitable ranges of a, b, c, d, e, f, and g in the formula (1) are the same as the suitable ranges of the molar ratio of the content of each element to the content of the phosphorus element described above. That is, the suitable range of a is the same as the suitable range of [Li/P] described above, the suitable range of b is the same as the suitable range of [Al/P] described above, the suitable range of c is the same as the suitable range of [Zn/P] described above, the suitable range of d is the same as the suitable range of [S/P] described above, the suitable range of e is the same as the suitable range of [N/P] described above, the suitable range of f is the same as the suitable range of [X/P] described above, and the suitable range of g is the same as the suitable range of [Y/P] described above.

(Physical properties, applications, and the like)

The lower limit of the ionic conductivity of the solid electrolyte at 25°C is preferably 4.7 mS/cm, more preferably 4.8 mS/cm, still more preferably 4.9 mS/cm, and even more preferably 5.0 mS/cm. When the ionic conductivity of the solid electrolyte at 25°C is equal to or more than the lower limit, the charge-discharge performance of the energy storage device including the solid electrolyte can be enhanced. The upper limit of the ionic conductivity is not particularly limited, but may be, for example, 20 mS/cm, 10 mS/cm, or 8 mS/cm.

The "ionic conductivity" of the solid electrolyte is determined by measuring an alternating-current impedance by the following method. Under an argon atmosphere with a dew point of -50°C or lower, 120 mg of a sample powder is put into a powder molder of 10 mm in inner diameter, and then subjected to uniaxial pressure molding at 50 MPa or less by using a hydraulic press. After pressure release, 120 mg of SUS316L powder as a current collector is put on an upper surface of the sample, and then subjected to uniaxial pressing at 50 MPa or less by using the hydraulic press again. Next, 120 mg of SUS316L powder as a current collector is put on a lower surface of the sample, and then subjected to uniaxial pressing at 360 MPa for 5 minutes to obtain a pellet for ionic conductivity measurement. This pellet for ionic conductivity measurement is inserted into an HS cell manufactured by Hohsen Corp. to measure the alternating-current impedance at a predetermined temperature. The measurement conditions are an applied voltage amplitude of 20 mV, a frequency range from 1 MHz to 100 mHz, and a measurement temperature of 25°C.

The shape of the solid electrolyte is not particularly limited, and is usually granular, massive, or the like. The solid electrolyte can be suitably used as a nonaqueous electrolyte of an energy storage device such as a lithium ion secondary battery, particularly a lithium ion energy storage device. Among them, the solid electrolyte can be particularly suitably used as a nonaqueous electrolyte of an all-solid-state battery. The solid electrolyte can be used for any of a positive electrode layer, an isolation layer, a negative electrode layer and the like in the energy storage device.

<Method for producing solid electrolyte>

A method for producing a solid electrolyte according to an embodiment of the present invention is not particularly limited, and may include, for example, preparing a composition containing a lithium element, a phosphorus element, a sulfur element, a halogen element, and an aluminum element, and treating the composition.

(Preparation step)

The composition used as a raw material in the production method is usually a mixture of two or more compounds or simple substances (hereinafter, also referred to as a compound or the like) containing at least one element of a lithium element, a phosphorus element, a sulfur element, a halogen element, and an aluminum element. It is sufficient if any of the compounds or the like contained in the composition material (mixture) contains a lithium element, a phosphorus element, a sulfur element, a halogen element, and an aluminum element. One of the compounds may contain therein two or more elements from among a lithium element, a phosphorus element, a sulfur element, a halogen element, and an aluminum element. The composition material may contain a compound or the like containing none of a lithium element, a phosphorus element, a sulfur element, a halogen element, and an aluminum element.

Examples of the compound or the like containing a lithium element include $Li_2S$, $Li_2O$, $Li_3N$, $Li_2CO_3$, and metallic

lithium. In addition, the compound may be LiBr, LiI, $Li_{1.5}Al_{0.5}N$, or the like described later. Among these examples, $Li_2S$, LiBr, LiI, and $Li_{1.5}Al_{0.5}N$ are preferable. One of the compounds or the like containing a lithium element may be used alone, or two or more thereof may be used in mixture.

Examples of the compound or the like containing a phosphorus element include $P_2S_3$, $P_2S_5$, $P_2O_5$, $P_3N_5$, and elemental phosphorus. Among these examples, $P_2S_3$ and $P_2S_5$ are preferable, and $P_2S_5$ is more preferable. One of the compounds or the like containing a phosphorus element may be used alone, or two or more thereof may be used in mixture.

Examples of the compound or the like containing a sulfur element include $Li_2S$, $P_2S_3$, $P_2S_5$, $Al_2S_3$, MgS, $SiS_2$, and elemental sulfur. Among these examples, $Li_2S$, $P_2S_3$, $P_2S_5$, and $Al_2S_3$, are preferable. One of the compounds or the like containing a sulfur element may be used alone, or two or more thereof may be used in mixture.

Examples of the compound or the like containing a halogen element include LiF, LiCl, LiBr, LiI, ZnBr, $Zn_{0.5}I$, $F_2$, $Cl_2$, $Br_2$, and $I_2$. Among these examples, LiI, LiBr, and $Zn_{0.5}I$ are preferable.

As the compound or the like containing an aluminum element, a compound containing an aluminum element and a nitrogen element is preferable, and a compound represented by $Li_\alpha Al_\beta N_\gamma$ ($\alpha$, $\beta$, and y are numerical values that give a stoichiometric ratio) is more preferable. The compound represented by $Li_\alpha Al_\beta N_\gamma$ (hereinafter, also referred to as a Li-Al-N-containing compound) can be produced by the following procedure. First, a nitride of a lithium element (for example, $Li_3N$) and a nitride of an aluminum element (for example, AlN) are prepared and mixed in a mortar or the like. Next, a pellet of the mixed raw material compound is produced. Next, the pellet is heat-treated to produce a Li-Al-N-containing compound. It is to be noted that the means for preparing the Li-Al-N-containing compound is not limited thereto, and the Li-Al-N-containing compound may be prepared by other methods. For example, the raw materials of the Li-Al-N-containing compound may be two or more compounds containing any of a lithium element, an aluminum element, and a nitrogen element. The Li-Al-N-containing compound may be prepared by a mechanical milling treatment. As the Li-Al-N-containing compound, those industrially produced and sold may be prepared.

As the Li-Al-N-containing compound, $Li_{1.5}Al_{0.5}N$ is preferable from the viewpoint of easy availability and suppression of discharge of the nitrogen element to the outside of the system in the producing process of the solid electrolyte.

Examples of the compound or the like containing an aluminum element also include an oxide of an aluminum element, a sulfide of an aluminum element, a nitride of an aluminum element, and an alloy of an aluminum element and a lithium element. Examples of the sulfide of an aluminum element include $Al_2S_3$. Examples of the nitride of an aluminum element include AlN. One of the compounds containing an aluminum element may be used alone, or two or more thereof may be used in mixture.

The composition preferably contains a nitrogen element. That is, the composition preferably contains a compound or the like containing a nitrogen element. Examples of the compound or the like containing a nitrogen element include $Li_3N$, $P_3N_5$, the Li-Al-N-containing compound, and AlN described above.

For example, as an embodiment, the composition may be a composition containing $Li_2S$, $P_2S_5$, $Li_{1.5}Al_{0.5}N$, LiI, LiBr, and $Zn_{0.5}I$. As other embodiments, the composition may be a composition containing $Li_2S$, $P_2S_5$, $Al_2S_3$, LiI, LiBr, and $Zn_{0.5}I$.

In the composition, the compounds and the like are mixed so that the constituent elements satisfy both of the formulas (a1) and (b1) or both of the formulas (a2) and (b2). The suitable content of each element in the composition is the same as the suitable content of each element in the sulfide solid electrolyte according to an embodiment of the present invention described above.

(Treatment step)

In the production method, the composition is subjected to a treatment to obtain a solid electrolyte. Examples of the treatment include a method of obtaining an intermediate by mechanical milling or the like and then heating the obtained intermediate. It is to be noted that the means for obtaining the intermediate is not limited to the mechanical milling or the like, and a method other than the mechanical milling, for example, a melt quenching method may be employed.

The mechanical milling may be either dry or wet, but is preferably wet mechanical milling because the compounds and the like of the raw materials can be mixed more uniformly. Examples of the mechanical milling include a case-driven mill, a medium stirring mill, milling with a high-speed rotary crusher or the like, a roller mill, and a jet mill. Examples of the case-driven mill include a rotary mill, a vibration mill, and a planetary mill. Examples of the medium stirring mill include an attritor, and a bead mill. Examples of the milling with a high-speed rotary crusher include a hammer mill, and a pin mill. Among these examples, the case-driven mill is preferable, and the planetary mill is particularly preferable.

The intermediate obtained through the mechanical milling or the like may have a crystal structure, but is preferably so-called sulfide glass. The term "sulfide glass" means a sulfide solid electrolyte including an amorphous structure. When the intermediate is sulfide glass, a solid electrolyte can be obtained, which has only a small amount of less stable crystal phase such as $Li_2S$ and has respective elements highly dispersed.

The intermediate obtained by the mechanical milling or the like is subjected to heating (heat treatment). Thus, a solid electrolyte is obtained, in which at least a part of the intermediate is crystallized, preferably crystallized into HICP or the like. The heating (heat treatment) may be performed under a reduced pressure atmosphere or an inert gas atmosphere.

The lower limit of the heating temperature is preferably T1 - 20 [°C], more preferably T1 [°C], and still more preferably T1 + 10 [°C], based on the crystallization temperature T1 at which HICP or the like precipitates. Meanwhile, the upper limit of the heating temperature is preferably T2 - 20 [°C], more preferably T2 - 30 [°C], and still more preferably T2 - 40 [°C] based on the crystallization temperature T2 at which $\beta$-$Li_3PS_4$ or the like precipitates. By setting the heating temperature to the above lower limit or higher, the precipitation of HICP or the like having high ionic conductivity can be promoted. By setting the heating temperature to the upper limit or lower, the phase transition to $\beta$-$Li_3PS_4$ or the like having low ionic conductivity can be suppressed.

<Energy storage device>

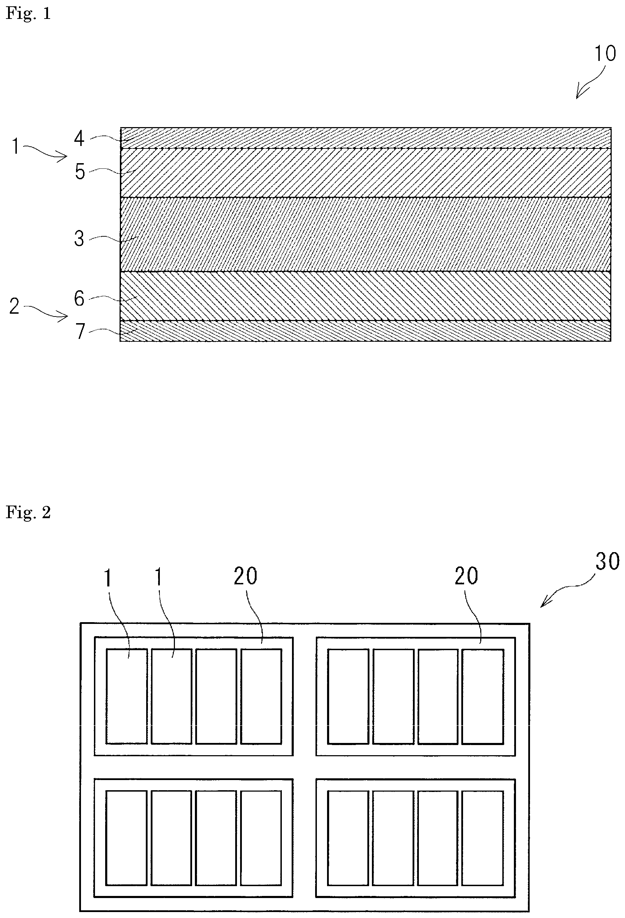

Hereinafter, as an embodiment of the energy storage device according to the present invention, an all-solid-state battery will be described as a specific example. An energy storage device 10 shown Fig. 1, which is an all-solid-state battery, is a secondary battery that has a positive electrode layer 1 and a negative electrode layer 2 disposed with an isolation layer 3 interposed therebetween. The positive electrode layer 1 includes a positive substrate 4 and a positive active material layer 5, and the positive substrate 4 serves as the outermost layer of the positive electrode layer 1. The negative electrode layer 2 includes a negative substrate 7 and a negative active material layer 6, and the negative substrate 7 serves as the outermost layer of the negative electrode layer 2. In the energy storage device 10 shown in Fig. 1, the negative active material layer 6, an isolation layer 3, the positive active material layer 5, and the positive substrate 4 are stacked in this order on the negative substrate 7.

The energy storage device 10 contains the solid electrolyte according to an embodiment of the present invention in at least one of the positive electrode layer 1, the negative electrode layer 2, and the isolation layer 3. More specifically, the solid electrolyte according to an embodiment of the present invention is contained in at least one of the positive active material layer 5, the negative active material layer 6, and the isolation layer 3. The energy storage device 10 contains a solid electrolyte having high ionic conductivity, and thus has good charge-discharge performance.

The energy storage device 10 may also use a solid electrolyte other than the solid electrolyte according to an embodiment of the present invention. Examples of another solid electrolyte include a sulfide solid electrolyte, an oxide solid electrolyte, a dry polymer electrolyte, a gel polymer electrolyte, and a pseudo solid electrolyte other than the solid electrolyte according to an embodiment of the present invention, and among them, a sulfide solid electrolyte is preferable. In addition, one layer in the energy storage device 10 may contain therein multiple different types of solid electrolytes, or the energy storage device 10 may contain therein different solid electrolytes for each of the layers.

Examples of the sulfide solid electrolyte other than the solid electrolyte according to an embodiment of the present invention include $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$Li_2O$, $Li_2S$-$P_2S_5$-$Li_2O$-$LiI$, $Li_2S$-$P_2S_5$-$Li_3N$, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$B_2S_3$, $Li_2S$-$P_2S_5$-$Z_mS_{2n}$ (provided that m and n are positive numbers, and Z is any of Ge, Zn, and Ga), $Li_2SGeS_2$, $Li_2S$-$SiS_2$-$Li_3PO_4$, $Li_2S$-$SiS_2$-$Li_xMO_y$ (provided that x and y are positive numbers, and M is any of P, Si, Ge, B, Al, Ga, and In), and $Li_{10}GeP_2S_{12}$.

(Positive electrode layer)

The positive electrode layer 1 includes the positive substrate 4, and the positive active material layer 5 stacked on the surface of the positive substrate 4. The positive electrode layer 1 may include an intermediate layer between the positive substrate 4 and the positive active material layer 5.

The positive substrate 4 has conductivity. It is determined whether or not the negative substrate has "conductivity" by using, as a threshold, a volume resistivity measured in accordance with JIS-H-0505 (1975) of $10^{-2}$ $\Omega$ ·cm. As the material of the positive substrate 4, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate 4 include a foil, a deposited film, a mesh, and a porous material, and a foil is preferable from the viewpoint of cost. Accordingly, the positive substrate 4 is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate 4 is preferably 3 $\mu$m or more and 50 $\mu$m or less, more preferably 5 $\mu$m or more and 40 $\mu$m or less, still more preferably 8 $\mu$m or more and 30 $\mu$m or less, and particularly preferably 10 $\mu$m or more and 25 $\mu$m or less. The average thickness of the positive substrate 4 falls within the range mentioned above, thereby making it possible to increase the energy density per volume of the energy storage device 10 while increasing the strength of the positive substrate 4. The "average thickness" is an average value of thicknesses measured at any five positions (hereinafter, the same applies to the average thickness.).

The intermediate layer is a layer disposed between the positive substrate 4 and the positive active material layer 5. The intermediate layer includes a conductive agent such as carbon particles, thereby reducing contact resistance between the positive substrate 4 and the positive active material layer 5. The configuration of the intermediate layer is not particularly limited, and includes, for example, a binder and a conductive agent.

The positive active material layer 5 includes a positive active material. The positive active material layer 5 can be formed from a so-called positive composite including a positive active material. The positive active material layer 5 may contain a mixture or composite including a positive active material and a solid electrolyte and the like. The positive active material layer 5 contains optional components such as a conductive agent, a binder (binding agent), a thickener, and a filler, if necessary. One of, or two or more of these optional components may substantially fail to be contained in the positive active material layer 5.

The positive active material can be appropriately selected from known positive active materials. As a positive active material for a lithium ion secondary battery, a material capable of storing and releasing lithium ions is normally used. Examples of the positive active material include lithium transition metal composite oxides that have an $\alpha$-NaFeO$_2$-type crystal structure, lithium transition metal oxides that have a spinel-type crystal structure, polyanion compounds, chalcogenides, and sulfur. Examples of the lithium transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < y < 1$, $0 < 1-x-y$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < y < 1$, $0 < 1-x-y$), Li[Li$_x$Ni$_\gamma$Mn$_\beta$Co$_{(1-x-\gamma-\beta)}$]O$_2$ ($0 \leq x < 0.5$, $0 < \gamma$, $0 < \beta$, $0.5 < y + \beta < 1$, $0 < 1-x-\gamma-\beta$), and Li[Li$_x$Ni$_\gamma$Co$_\beta$Al$_{(1-x-\gamma-\beta)}$]O$_2$ ($0 \leq x < 0.5$, $0 < \gamma$, $0 < \beta$, $0.5 < y + \beta < 1$, $0 < 1-x-\gamma-\beta$). Examples of the lithium-transition metal composite oxides having a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include a titanium disulfide, a molybdenum disulfide, and a molybdenum dioxide. Some of atoms or polyanions in these materials may be substituted with atoms or anion species composed of other elements. The surfaces of these materials may be coated with other materials. In the positive active material layer 5, one of these materials may be used alone, or two or more thereof may be used in mixture.

The positive active material is typically particles (powder). The average particle size of the positive active material is preferably 0.1 $\mu$m or more and 20 $\mu$m or less, for example. By setting the average particle size of the positive active material to be equal to or more than the lower limit mentioned above, the positive active material is easily produced or handled. By setting the average particle size of the positive active material to be equal to or less than the upper limit mentioned above, the electron conductivity of the positive active material layer 5 is improved. It is to be noted that in the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive active material layer 5 is preferably 10% by mass or more and 95% by mass or less, and this lower limit is more preferably 30% by mass, and still more preferably 50% by mass. The content of the positive active material falls within the range mentioned above, thereby allowing, for example, the discharge capacity of the energy storage device 10 to be increased.

When the positive active material layer 5 contains a solid electrolyte, the content of the solid electrolyte is preferably 5% by mass or more and 90% by mass or less, more preferably 20% by mass or more and 70% by mass or less, and this upper limit may be still more preferably 50% by mass. The content of the solid electrolyte falls within the range mentioned above, thereby allowing, for example, the discharge capacity of the energy storage device 10 to be increased. When the solid electrolyte according to an embodiment of the present invention is used for the positive active material layer 5, the content of the solid electrolyte according to an embodiment of the present invention in an all solid electrolyte in the positive active material layer 5 is preferably 50% by mass or more, more preferably 70% by mass or more, still more preferably 90% by mass or more, and even more preferably substantially 100% by mass.

The mixture of the positive active material and the solid electrolyte and the like is a mixture prepared by mixing the positive active material, the solid electrolyte, and the like by mechanical milling or the like. For example, the mixture of the positive active material and the solid electrolyte and the like can be obtained by mixing a particulate positive active material, a particulate solid electrolyte, and the like. Examples of the composite of the positive active material and the solid electrolyte and the like include a composite that has a chemical or physical bond between the positive active material and the solid electrolyte and the like, and a composite obtained by mechanically combining the positive active material and the solid electrolyte and the like. The composite has, in one particle thereof, the positive active material and the solid electrolyte and the like, and examples of the composite include a composite in which the positive active material and the solid electrolyte and the like form an aggregated state, and a composite in which a film containing the solid electrolyte and the like is formed on at least a part of the surface of the positive active material.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a composite material of carbon black and CNT may be used. Among these materials, carbon black is preferable from the viewpoints of electron conductivity and coatability, and in particular, acetylene black is preferable.

The content of the conductive agent in the positive active material layer 5 is preferably 1% by mass or more and 10% by mass or less, more preferably 3% by mass or more and 9% by mass or less. The content of the conductive agent falls within the range mentioned above, thereby allowing the energy density of the energy storage device 10 to be increased.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer 5 is preferably 1% by mass or more and 10% by mass or less, more preferably 3% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer 5 may contain a typical nonmetal element such as B, N, P, F, Cl, Br, or I, a typical metal element such as Li, Na, Mg, Al, K, Ca, Zn, Ga, Ge, Sn, Sr, or Ba or a transition metal element such as Sc, Ti, V, Cr, Mn, Fe, Co, Ni, Cu, Mo, Zr, Nb, or W as a component other than the positive active material, the solid electrolyte, the conductive agent, the binder, the thickener, and the filler.

The average thickness of the positive active material layer 5 is preferably 30 $\mu$m or more and 1,000 $\mu$m or less, more preferably 60 $\mu$m or more and 500 $\mu$m or less. By setting the average thickness of the positive active material layer 5 to be equal to or more than the lower limit mentioned above, the energy storage device 10 with a high energy density can be obtained. The average thickness of the positive active material layer 5 is set to be equal to or less than the upper limit mentioned above, thereby allowing the size of the energy storage device 10 to be reduced.

(Negative electrode layer)

The negative electrode layer 2 includes a negative substrate 7 and a negative active material layer 6 disposed directly on the negative substrate 7 or over the negative substrate 7 with an intermediate layer interposed therebetween. The configuration of the intermediate layer is not particularly limited, and can be selected from, for example, the configurations exemplified for the positive electrode layer 1.

The negative substrate 7 has conductivity. As the material of the negative substrate 7, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate 7 include a foil, a deposited film, a mesh, and a porous material, and a foil is preferable from the viewpoint of cost. Accordingly, the negative substrate 7 is preferably a copper foil or a copper alloy foil. Examples of the copper foil include a rolled copper foil and an electrolytic copper foil.

The average thickness of the negative substrate 7 is preferably 2 $\mu$m or more and 35 $\mu$m or less, more preferably

3 μm or more and 30 μm or less, still more preferably 4 μm or more and 25 μm or less, and particularly preferably 5 μm or more and 20 μm or less. The average thickness of the negative substrate 7 falls within the range mentioned above, thereby allowing the energy density per volume of the energy storage device 10 to be increased while increasing the strength of the negative substrate 7.

The negative active material layer 6 includes a negative active material. The negative active material layer 6 can be formed from a so-called negative composite including a negative active material. The negative active material layer 6 may contain a mixture or composite including a negative active material and a solid electrolyte and the like. The negative active material layer 6 includes optional components such as a conductive agent, a binder, a thickener, and a filler, if necessary. The types and suitable contents of the optional components in the negative active material layer 6 are the same as those of the optional components in the positive active material layer 5 described above. One of, or two or more of these optional components may substantially fail to be contained in the negative active material layer 6.

The negative active material layer 6 may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the solid electrolyte, the conductive agent, the binder, the thickener, and the filler.

The negative active material can be appropriately selected from known negative active materials. As the negative active material for a lithium ion secondary battery, a material capable of absorbing and releasing lithium ions is usually used. Examples of the negative active material include metallic lithium; metals or metalloids such as Si and Sn; metal oxides or metalloid oxides such as a Si oxide, a Ti oxide, and a Sn oxide; titanium-containing oxides such as $Li_4Ti_5O_{12}$, $LiTiO_2$, and $TiNb_2O_7$; a polyphosphoric acid compound; silicon carbide; and carbon materials such as graphite and non-graphitic carbon (easily graphitizable carbon or hardly graphitizable carbon). Among these materials, graphite and non-graphitic carbon are preferable. In the negative active material layer 6, one of these materials may be used singly, or two or more of these materials may be mixed and used.

The term "graphite" refers to a carbon material in which the average lattice spacing ($d_{002}$) of the (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average lattice spacing ($d_{002}$) of a (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, for use as a working electrode, a negative electrode containing a carbon material as a negative active material, and has metal lithium for use as a counter electrode.

The term "hardly graphitizable carbon" refers to a carbon material in which the $d_{002}$ is 0.36 nm or more and 0.42 nm or less.

The term "easily graphitizable carbon" refers to a carbon material in which the $d_{002}$ is 0.34 nm or more and less than 0.36 nm.

The negative active material is normally particles (powder). The average particle size of the negative active material can be, for example, 1 nm or more and 100 μm or less. When the negative active material is a carbon material, a titanium-containing oxide, or a polyphosphoric acid compound, the average particle size thereof may be 1 μm or more and 100 μm or less. When the negative active material is Si, Sn, an oxide of Si, an oxide of Sn, or the like, the average particle size thereof may be 1 nm or more and 1 μm or less. By setting the average particle size of the negative active material to be equal to or greater than the above lower limit, the negative active material is easily produced or handled. By setting the average particle size of the negative active material to be equal to or less than the upper limit, the electron conductivity of the negative active material layer 6 is improved. A crusher, a classifier, or the like is used in order to obtain a powder with a predetermined particle size. The crushing method and the classification method can be selected from, for example, the methods exemplified for the positive electrode layer 1. When the negative active material is a metal such as metallic lithium, the negative active material layer 6 may have the form of a foil.

The content of the negative active material in the negative active material layer 6 is preferably 10% by mass or more and 95% by mass or less, and this lower limit is more preferably 30% by mass, and still more preferably 50% by mass. The content of the negative active material falls within the range mentioned above, thereby allowing, for example, the discharge capacity of the energy storage device 10 to be increased.

When the negative active material layer 6 contains a solid electrolyte, the content of the solid electrolyte is preferably 5% by mass or more and 90% by mass or less, more preferably 20% by mass or more and 70% by mass or less, and this upper limit may be still more preferably 50% by mass. The content of the solid electrolyte falls within the range mentioned above, thereby allowing, for example, the discharge capacity of the energy storage device 10 to be increased. When the solid electrolyte according to an embodiment of the present invention is used for the negative active material layer 6, the content of the solid electrolyte according to an embodiment of the present invention in an all solid electrolyte in the negative active material layer 6 is preferably 50% by mass or more, more preferably 70% by mass or more, still more preferably 90% by mass or more, and even more preferably substantially 100% by mass.

The mixture or composite of the negative active material and the solid electrolyte and the like can be obtained by replacing the positive active material with the negative active material in the above-described mixture or composite of the positive active material and the solid electrolyte and the like.

The average thickness of the negative active material layer 6 is preferably 30 $\mu$m or more and 1,000 $\mu$m or less, more preferably 60 $\mu$m or more and 500 $\mu$m or less. By setting the average thickness of the negative active material layer 6 to be equal to or more than the lower limit mentioned above, the energy storage device 10 with a high energy density can be obtained. The average thickness of the negative active material layer 6 is set to be equal to or less than the upper limit mentioned above, thereby allowing the size of the energy storage device 10 to be reduced.

(Isolation layer)

The isolation layer 3 contains a solid electrolyte. The content of the solid electrolyte in the isolation layer 3 is preferably 70% by mass or more, more preferably 90% by mass or more, still more preferably 99% by mass or more, and even more preferably substantially 100% by mass in some cases. When the solid electrolyte according to an embodiment of the present invention is used for the isolation layer 3, the content of the solid electrolyte according to an embodiment of the present invention in an all solid electrolyte in the isolation layer 3 is preferably 50% by mass or more, more preferably 70% by mass or more, still more preferably 90% by mass or more, and even more preferably substantially 100% by mass.

The isolation layer 3 may contain optional components such as a phosphoric acid compound, e.g., $Li_3PO_4$, an oxide, a halogen compound, a binder, a thickener, and a filler. The optional components such as a binder, a thickener, and a filler can be selected from the materials exemplified for the positive active material layer 5.

The average thickness of the isolation layer 3 is preferably 1 $\mu$m or more and 50 $\mu$m or less, more preferably 3 $\mu$m or more and 20 $\mu$m or less. The average thickness of the isolation layer 3 is set to be equal to or more than the lower limit mentioned above, thereby allowing the positive electrode layer 1 and the negative electrode layer 2 to be highly reliably insulated. The average thickness of the isolation layer 3 is equal to or smaller than the upper limit mentioned above, thereby allowing the energy density of the energy storage device 10 to be increased.

The energy storage device according to the present embodiment can be mounted as an energy storage unit (battery module), which is formed by putting together a plurality of energy storage devices, on, for example, a power source for motor vehicles such as an electric vehicle (EV), a hybrid vehicle (HEV), and a plug-in hybrid vehicle (PHEV), a power source for electronic devices such as a personal computer and a communication terminal, or a power source for power storage. In this case, the technique of the present invention may be applied to at least one energy storage device included in the energy storage unit.

Fig. 2 illustrates one example of an energy storage apparatus 30 formed by putting together energy storage units 20 each of which is formed by putting together two or more energy storage devices 10 electrically connected to each other. The energy storage apparatus 30 may include, for example, a busbar (not illustrated) electrically connecting the two or more energy storage devices 10, and a busbar (not illustrated) electrically connecting the two or more energy storage units 20. The energy storage unit 20 or the energy storage apparatus 30 may include a state monitor (not shown) that monitors the state of one or more energy storage devices 10.

<Method for manufacturing energy storage device>

The method for producing an energy storage device according to an embodiment of the present invention can be performed by a commonly known method, except that the solid electrolyte according to an embodiment of the present invention is used as a part of a solid electrolyte or the entire solid electrolyte for preparing at least one of the positive electrode layer, the isolation layer, and the negative electrode layer. Specifically, the production method includes, for example, (1) preparing a positive composite, (2) preparing a material for an isolation layer, (3) preparing a negative composite, and (4) stacking a positive electrode layer, the isolation layer, and a negative electrode layer. Hereinafter, each of the steps will be described in detail.

(1) Step of preparing positive composite

In this step, a positive composite for forming the positive electrode layer (positive active material layer) is typically prepared. The method for preparing the positive composite is not particularly limited, and can be appropriately selected in accordance with the purpose. Examples thereof include a mechanical milling treatment of a material for the positive composite, compression molding of the positive active material, and sputtering with the use of a target material of the positive active material. When the positive composite contains the mixture or composite including the positive active material and the solid electrolyte, this step can include mixing the positive active material and the solid electrolyte by using, for example, a mechanical milling method or the like to prepare the mixture or composite of the positive active material and the solid electrolyte.

(2) Step of preparing material for isolation layer

In this step, a material for isolation layer for forming the isolation layer is typically prepared. When the energy storage device is an all-solid-state battery, the material for isolation layer can be a solid electrolyte. The solid electrolyte as the material for isolation layer can be prepared by a conventionally known method. For example, predetermined materials can be subjected to a treatment by a mechanical milling method to obtain the solid electrolyte. The material for the isolation layer may be produced by heating predetermined materials to a melting temperature or higher by a melt quenching method to melt and mix the materials at a predetermined ratio, and quenching the mixture. Examples of other methods for synthesizing the material for isolation layer include a solid phase method of sealing under reduced pressure and then firing, a liquid phase method such as dissolution-precipitation, a gas phase method (PLD), and firing under an argon atmosphere after mechanical milling.

(3) Step of preparing negative composite

In this step, a negative composite for forming the negative electrode layer (negative active material layer) is typically prepared. The specific method for preparing the negative composite is the same as that for the positive composite. When the negative composite contains the mixture or composite including the negative active material and the solid electrolyte, this step can include mixing the negative active material and the solid electrolyte by using, for example, a mechanical milling method or the like to prepare the mixture or composite of the negative active material and the solid electrolyte.

(4) Stacking step

In this step, for example, a positive electrode layer including a positive substrate and a positive active material layer, an isolation layer, and a negative electrode layer including a negative substrate and a negative active material layer are stacked. In this step, the positive electrode layer, the isolation layer, and the negative electrode layer may be sequentially formed in this order, or vice versa, and the order of forming the respective layers is not particularly limited. The positive electrode layer is formed, for example, by pressure-molding a positive substrate and the positive composite, the isolation layer is formed by pressure-molding the material for isolation layer, and the negative electrode layer is formed by pressure-molding a negative substrate and the negative composite. The positive electrode layer, the isolation layer, and the negative electrode layer may be stacked by pressure-molding the positive substrate, the positive composite, the material for isolation layer, the negative composite, and the negative substrate at a time. The positive electrode layer and the negative electrode layer may be each formed in advance, and stacked by pressure-molding together with the isolation layer.

<Other embodiments>

It is to be noted that the solid electrolyte energy storage device according to the present invention is not limited to the embodiment mentioned above, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to the configuration according to an embodiment.

For example, the energy storage device according to the present invention may include other layers besides the positive electrode layer, the isolation layer, and the negative electrode layer. The present invention can also be applied to an energy storage device including a bipolar electrode. In addition, the energy storage device according to the present invention may include a liquid. Examples of such an energy storage device include an energy storage device in which voids of the positive active material layer 5, the isolation layer 3, the negative active material layer 6, and the like in the above-described energy storage device 10 are filled with a nonaqueous electrolyte solution or the like containing an Ionic liquid or the like. The energy storage device according to the present invention may be a capacitor or the like, in addition to the energy storage device to serve as a secondary battery.

<Examples>

Hereinafter, the present invention will be described more specifically with reference to examples, but the present invention is not to be considered limited to the following examples.

[Example 1]

A solid electrolyte of Example 1 satisfying a composition ratio described in Table 1 was synthesized by the following treatment.

First, $Li_3N$ and AlN were weighed so as to reach a molar ratio of 1.2 : 1, mixed in a mortar, and then pelletized. Next, the pellet was subjected to a heat treatment at 750°C for 1 hour to prepare $Li_{1.5}Al_{0.5}N$. These steps were performed under an argon atmosphere having a dew point of -50°C or lower. The fact that the main phase of the prepared $Li_{1.5}Al_{0.5}N$ was $Li_{1.5}Al_{0.5}N$ was confirmed by X-ray diffraction measurement.

In a glove box in an argon atmosphere with a dew point of -50°C or lower, $Li_2S$ (99.98% manufactured by Aldrich), $P_2S_5$ (99% manufactured by Aldrich), $Li_{1.5}Al_{0.5}N$, LiBr (99.999% manufactured by Aldrich), LiI (99.999% manufactured by Aldrich), and $Zn_{0.5}I$ (99.999% manufactured by Aldrich) were weighed so as to reach molar ratios of 53.97 : 19.14 : 4.08 : 11.13 : 11.00 : 0.66, and then mixed in a mortar to prepare a composition material containing a lithium element, a phosphorus element, a sulfur element, a bromine element, an iodine element, an aluminum element, a nitrogen element, and a zinc element as constituent elements.

The composition was put into a closed 80 mL zirconia pot containing 160 g of zirconia balls of 4 mm in diameter. The composition was subjected to a mechanical milling treatment for 45 hours at the number of revolutions of 510 rpm by a planetary ball mill (manufactured by FRITSCH, model number: Premium line PL-7) to obtain an intermediate.

The obtained intermediate was heated (heat-treated) at 210°C for 2 hours to obtain a solid electrolyte according to Example 1. The heat treatment temperature HT [°C] was set within a range of T1 - 20°C or higher and T2 - 20°C or lower based on the above-described crystallization temperature T1 [°C] and the above-described crystallization temperature T2 [°C]. The crystallization temperature T1 [°C] and the crystallization temperature T2 [°C] were determined by taking out a part of the intermediate after the mechanical milling treatment and performing DSC measurement by the above method.

[Examples 2 to 13 and Comparative Examples 1 to 9]

The compounds used as raw materials and the use amounts (molar ratios) thereof were adjusted, so that the composition ratios of the solid electrolytes were as shown in Tables 1 and 2. Also, the heat treatment temperature was set as indicated in Tables 1 and 2. The solid electrolytes of Examples 2 to 13 and Comparative Examples 1 to 9 were obtained in the same manner as in Example 1 except for the above adjustments.

In Example 2 and Comparative Examples 1, 7, and 9, $Li_{1.5}B_{0.5}N$ was used either instead of $Li_{1.5}Al_{0.5}N$ or together with $Li_{1.5}Al_{0.5}N$. $Li_{1.5}B_{0.5}N$ was prepared by the following procedure. $Li_3N$ and BN were weighed so as to reach a molar ratio of 1.2 : 1, mixed in a mortar, and then pelletized. Next, the pellet was subjected to a heat treatment at 800°C for 10 minutes to obtain $Li_{1.5}B_{0.5}N$. These steps were performed under an argon atmosphere having a dew point of -50°C or lower.

Also, in Examples 3 and 4, $Al_2S_3$ was used instead of $Li_{1.5}Al_{0.5}N$. In Comparative Examples 1 to 3, $Li_{1.5}Al_{0.5}N$ was not used, and in Comparative Examples 7 to 9, halides (LiBr, LiI and $Zn_{0.5}I$) were not used.

The heat treatment temperature HT [°C] of Examples 2 to 9, Examples 11 to 13, and Comparative Examples 1 to 6 was set in the same manner as in Example 1. The heat treatment temperature HT [°C] of Example 10 was also set within a range of T1 - 20°C or higher and T2 - 20°C or lower, and the specific heat treatment temperature was 190°C. The heat treatment temperature HT [°C] of Comparative Examples 7 to 9 was set to be at or higher than the crystallization temperature found within the range of room temperature to 400°C, and less than 100°C above that crystallization temperature.

With respect to the constituent elements of the solid electrolytes of Examples 1 to 13 and Comparative Examples 1 to 6, the molar ratio of the content of the lithium element to the content of the phosphorus element [Li/P], the molar ratio of the content of the sulfur element to the content of the phosphorus element [S/P], the molar ratio of the content of the aluminum element to the content of the phosphorus element [Al/P], the molar ratio of the content of the boron element to the content of the phosphorus element [B/P], the molar ratio of the content of the nitrogen element to the content of the phosphorus element [N/P], the molar ratio of the content of the halogen elements (the bromine element and the iodine element) to the content of the phosphorus element [X/P], the molar ratio of the content of the zinc element to the content of the phosphorus element [Zn/P], and the difference [Li/P] - [X/P] between [Li/P] and [X/P] are shown in Table 1. In addition, with respect to the constituent elements of the solid electrolytes of Comparative Examples 7 to 9, the molar ratio [Li/P] of the content of the lithium element to the content of the phosphorus element, the molar ratio [S/P] of the content of the sulfur element to the content of the phosphorus element, the molar ratio [Al/P] of the content of the aluminum element to the content of the phosphorus element, the molar ratio [B/P] of the content of the boron element to the content of the phosphorus element, the molar ratio [N/P] of the content of the nitrogen element to the content of the phosphorus element, the molar ratio [X/P] of the content of the halogen elements (the bromine element and the iodine element) to the content of the phosphorus element, and the molar ratio [Zn/P] of the content of the zinc element to the content of the phosphorus element are shown in Table 2. In the solid electrolytes of Examples 1 to 13 and Comparative Examples 1 to 9, it can be considered that elements other than the phosphorus element, the lithium element, the sulfur element, the aluminum element, the boron element, the nitrogen element, the bromine element, the iodine element, and the zinc element are substantially not contained. That is, for example, the composition formula of the solid electrolyte of Example 1 is $Li_{3.56}Al_{0.05}Zn_{0.01}PS_{3.91}N_{0.11}Br_{0.29}I_{0.30}$.

Regarding the solid electrolytes of Examples 1 to 13 and Comparative Examples 1 to 6, the crystallization temperature T1 [°C], the crystallization temperature T2 [°C], the difference between the crystallization temperatures T2-T1 [°C], the heat treatment temperature HT [°C], as well as the crystal structures that were confirmed by X-ray diffraction diagrams obtained via the powder X-ray diffraction measurement performed by the above-described methods, are shown in Table 1. Regarding the solid electrolytes of Comparative Examples 7 to 9, the heat treatment temperature HT [°C] is shown in Table 2.

[Reference Example 1]

$Li_2S$ and $Li_{1.5}Al_{0.5}N$ were weighed so as to reach a molar ratio of 87.5 : 12.5, and mixed in a mortar. 0.40 g of the resulting mixture was charged into a closed 80 mL zirconia pot containing 50 g of zirconia balls of 4 mm in diameter. These steps were performed under an argon atmosphere having a dew point of -50°C or lower. The mixture was treated for 1000 minutes at the number of revolutions of 400 rpm by a planetary ball mill (manufactured by FRITSCH, model number: Premium line PL-7) to obtain a solid electrolyte of Reference Example 1.

[Reference Example 2]

A solid electrolyte of Reference Example 2 was obtained in the same manner as that of Reference Example 1 except for replacing $Li_{1.5}Al_{0.5}N$ with $Li_{1.5}B_{0.5}N$.

With respect to the constituent elements of the solid electrolytes of Reference Examples 1 and 2, the molar ratio [Li/S] of the content of the lithium element to the content of the sulfur element, the molar ratio [Al/S] of the content of the aluminum element to the content of the sulfur element, the molar ratio [B/S] of the content of the boron element to the content of the sulfur element, and the molar ratio [N/S] of the content of the nitrogen element to the content of the sulfur element are shown in Table 3. In the solid electrolytes of Reference Examples 1 and 2, it can be considered that elements other than the sulfur element, the lithium element, the aluminum element, the boron element, and the nitrogen element are substantially not contained.

[Evaluation]

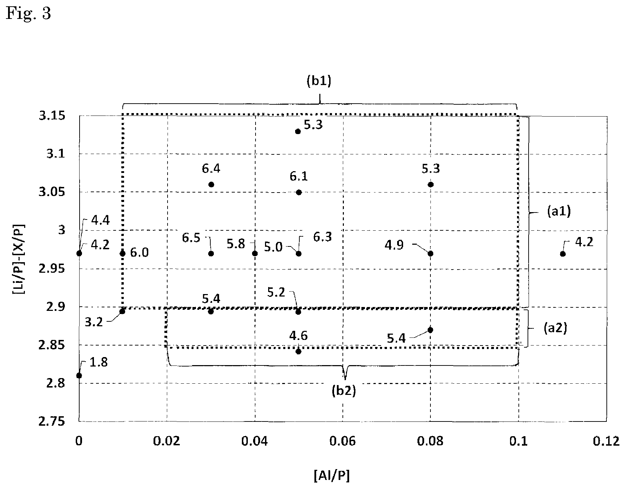

The ionic conductivity ($\sigma_{25}$) at 25°C of the solid electrolytes of Examples 1 to 13, Comparative Examples 1 to 9, and Reference Examples 1 and 2 was determined by measuring the alternating-current impedance by the above-described method using "VMP-300" manufactured by Bio-Logic Science Instruments. The measurement results are shown in Tables 1 to 3. Also, Fig. 3 shows a scatter diagram showing the relationship between values of [Li/P] - [X/P] and [Al/P] and ionic conductivity in Examples 1 to 13 and Comparative Examples 1 to 6. The numerical values assigned to the respective points in Fig. 3 are the ionic conductivity [mS/cm] of the solid electrolyte corresponding to the respective points. In addition, among Comparative Examples, Comparative Examples 7 to 9 containing no halogen element are not shown in Fig. 3.

[Table 1]

| | [Li/P]-[X/P] | [Li/P] | [S/P] | [Al/P] | [B/P] | [N/P] | [X/P] | [Br/P] | [I/P] | [Zn/P] | Crystallization temperature T1 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|---|---|
| Example 1 | 2.97 | 3.56 | 3.91 | 0.05 | 0.00 | 0.11 | 0.59 | 0.29 | 0.30 | 0.01 | 192 | 327 | 135 | 210 | HICP | 6.3 |
| Example 2 | 2.97 | 3.56 | 3.91 | 0.04 | 0.01 | 0.11 | 0.59 | 0.29 | 0.30 | 0.01 | 190 | 313 | 123 | 210 | HICP, LICP | 5.8 |
| Example 3 | 2.97 | 3.56 | 4.07 | 0.05 | 0.00 | 0.00 | 0.59 | 0.29 | 0.30 | 0.01 | 191 | 286 | 95 | 210 | HICP, LICP | 5.0 |
| Example 4 | 3.13 | 3.72 | 4.07 | 0.05 | 0.00 | 0.00 | 0.59 | 0.29 | 0.30 | 0.01 | 191 | 289 | 98 | 210 | HICP, LICP | 5.3 |
| Example 5 | 2.97 | 3.56 | 3.97 | 0.01 | 0.00 | 0.03 | 0.59 | 0.29 | 0.30 | 0.01 | 185 | 283 | 98 | 210 | HICP | 6.0 |
| Example 6 | 2.97 | 3.56 | 3.95 | 0.03 | 0.00 | 0.05 | 0.59 | 0.29 | 0.30 | 0.01 | 187 | 284 | 97 | 210 | HICP | 6.5 |
| Example 7 | 2.97 | 3.56 | 3.87 | 0.08 | 0.00 | 0.16 | 0.59 | 0.29 | 0.30 | 0.01 | 190 | 297 | 107 | 210 | HICP, LICP | 4.9 |
| Example 8 | 2.89 | 3.48 | 3.87 | 0.05 | 0.00 | 0.11 | 0.59 | 0.29 | 0.30 | 0.01 | 197 | 281 | 84 | 210 | HICP, LICP | 5.2 |
| Example 9 | 3.05 | 3.64 | 3.95 | 0.05 | 0.00 | 0.11 | 0.59 | 0.29 | 0.30 | 0.01 | 190 | 317 | 127 | 210 | HICP | 6.1 |
| Example 10 | 3.06 | 3.65 | 4.00 | 0.03 | 0.00 | 0.05 | 0.59 | 0.29 | 0.30 | 0.01 | 189 | 267 | 78 | 190 | HICP, LICP | 6.4 |
| Example 11 | 3.06 | 3.65 | 3.92 | 0.08 | 0.00 | 0.16 | 0.59 | 0.29 | 0.30 | 0.01 | 190 | 324 | 134 | 210 | HICP, LICP | 5.3 |
| Example 12 | 2.89 | 3.48 | 3.91 | 0.03 | 0.00 | 0.05 | 0.59 | 0.29 | 0.30 | 0.01 | 188 | 273 | 85 | 210 | HICP, LICP | 5.4 |
| Example 13 | 2.87 | 3.46 | 3.82 | 0.08 | 0.00 | 0.16 | 0.59 | 0.29 | 0.30 | 0.01 | 200 | 309 | 110 | 210 | HICP, LICP | 5.4 |
| Comparative Example 1 | 2.97 | 3.56 | 3.91 | 0.00 | 0.05 | 0.11 | 0.59 | 0.29 | 0.30 | 0.01 | 186 | 289 | 103 | 210 | HICP | 4.2 |
| Comparative Example 2 | 2.81 | 3.40 | 3.91 | 0.00 | 0.00 | 0.00 | 0.59 | 0.29 | 0.30 | 0.01 | 190 | 253 | 63 | 210 | HICP, LICP | 1.8 |
| Comparative Example 3 | 2.97 | 3.56 | 3.99 | 0.00 | 0.00 | 0.00 | 0.59 | 0.29 | 0.30 | 0.01 | 184 | 283 | 99 | 210 | HICP | 4.4 |

| | [Li/P] - [X/P] | [Li/P] | [S/P] | [Al/P] | [B/P] | [N/P] | [X/P] | [Br/P] | [I/P] | [Zn/P] | Crystallization temperature T1 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|---|---|
| Comparative Example 4 | 2.97 | 3.56 | 3.83 | 0.11 | 0.00 | 0.21 | 0.59 | 0.29 | 0.30 | 0.01 | 201 | 334 | 133 | 210 | HICP | 4.2 |
| Comparative Example 5 | 2.89 | 3.48 | 3.93 | 0.01 | 0.00 | 0.03 | 0.59 | 0.29 | 0.30 | 0.01 | 187 | 266 | 79 | 210 | HICP, LICP | 3.2 |
| Comparative Example 6 | 2.84 | 3.43 | 3.85 | 0.05 | 0.00 | 0.11 | 0.59 | 0.29 | 0.30 | 0.01 | 200 | 303 | 103 | 210 | HICP, LICP | 4.6 |

[Table 2]

| | [Li/P] | [S/P] | [Al/P] | [B/P] | [N/P] | [X/P] | [Br/P] | [I/P] | [Zn/P] | Heat treatment temperature HT [°C] | Ionic conductivity $\sigma_{25}$ [mS/cm] |
|---|---|---|---|---|---|---|---|---|---|---|---|
| Comparative Example 7 | 2.96 | 3.67 | 0.17 | 0.04 | 0.42 | 0.00 | 0.00 | 0.00 | 0.00 | 320 | 1.6 |
| Comparative Example 8 | 2.96 | 3.67 | 0.21 | 0.00 | 0.42 | 0.00 | 0.00 | 0.00 | 0.00 | 320 | 1.7 |
| Comparative Example 9 | 2.96 | 3.67 | 0.00 | 0.21 | 0.42 | 0.00 | 0.00 | 0.00 | 0.00 | 320 | 1.5 |

[Table 3]

| | [Li/S] | [Al/S] | [B/S] | [N/S] | Ionic conductivity $\sigma_{25}$ [mS/cm] |
|---|---|---|---|---|---|
| Reference Example 1 | 2.21 | 0.07 | 0.00 | 0.14 | $6.5 \times 10^{-5}$ |
| Reference Example 2 | 2.21 | 0.00 | 0.07 | 0.14 | $2.8 \times 10^{-3}$ |

As shown in Tables 1 and 2, the solid electrolytes of Comparative Examples 1 to 3, which contain no aluminum element; Comparative Example 4, which has a large content of the aluminum element ([Al/P]); Comparative Example 5, which has a small content of the aluminum element ([Al/P]); Comparative Example 6, which has a small content of the lithium element considered not to be bonded to a halogen element ([Li/P] - [X/P]); and Comparative Examples 7 to 9, which contain no halogen element, had low ionic conductivity. On the other hand, the solid electrolytes of Examples 1 to 13 containing a lithium element, a phosphorus element, a sulfur element, a halogen element, and an aluminum element and satisfying both of the formulas (a1) and (b1) or both of the formulas (a2) and (b2) had high ionic conductivity. In addition, as shown in Fig. 3, it is found that the ionic conductivity increases when [Li/P] - [X/P] and [Al/P] are within a predetermined range.

As shown in Table 3, when the solid electrolyte of Reference Example 1 in which an aluminum element was contained in the solid electrolyte containing a lithium element and a sulfur element was compared with the solid electrolyte of Reference Example 2 in which a boron element was contained in the solid electrolyte containing a lithium element and a sulfur element, the solid electrolyte of Reference Example 2 in which a boron element was contained had higher ionic conductivity. On the other hand, as shown in Table 1, for example, when the solid electrolyte of Example 1 in which an aluminum element was contained in the solid electrolyte containing a lithium element, a phosphorus element, and a sulfur element was compared with the solid electrolyte of Comparative Example 1 in which a boron element was contained in the solid electrolyte containing a lithium element, a phosphorus element, and a sulfur element, the solid electrolyte of Example 1 in which an aluminum element was contained had higher ionic conductivity. It was confirmed that the effect of increasing the ionic conductivity by incorporating the aluminum element is a specific effect that arises when the aluminum element is incorporated into a solid electrolyte containing a lithium element, a phosphorus element, and a sulfur element.

The solid electrolyte according to the present invention is suitably used as a solid electrolyte for an energy storage device such as an all-solid-state battery.

DESCRIPTION OF REFERENCE SIGNS

1: Positive electrode layer
2: Negative electrode layer
3: Isolation layer
4: Positive substrate
5: Positive active material layer
6: Negative active material layer
7: Negative substrate
10: Energy storage device (all-solid-state battery)
20: Energy storage unit
30: Energy storage apparatus

**Claims**

1. A solid electrolyte comprising:

   a lithium element, a phosphorus element, a sulfur element, a halogen element, and an aluminum element, the solid electrolyte having a crystal structure, and
   satisfying both of the following formulas (a1) and (b 1) or both of the formulas (a2) and (b2)

$$2.89 < [Li/P] \cdot [X/P] \le 3.15 \quad \cdots (a1)$$

$$0.01 \le [Al/P] \le 0.10 \quad \cdots (b1)$$

$$2.84 < [Li/P] \cdot [X/P] \le 2.89 \quad \cdots (a2)$$

$$0.02 \le [Al/P] \le 0.10 \quad \cdots (b2)$$

   wherein, in the formulas (a1), (b1), (a2), and (b2), [Li/P] is a molar ratio of the content of the lithium element to the content of the phosphorus element, [X/P] is a molar ratio of the content of the halogen element to the content of the phosphorus element, and [Al/P] is a molar ratio of the content of the aluminum element to the content of the phosphorus element.

2. The solid electrolyte according to claim 1,

   wherein the solid electrolyte is free of a boron element, or
   further comprises a boron element, and the molar content of the boron element is smaller than the molar content of the aluminum element.

3. The solid electrolyte according to claim 1 or 2, further comprising a nitrogen element.

4. The solid electrolyte according to claim 3, satisfying both of the following formulas (a3) and (b3).

$$2.92 \le [Li/P] \cdot [X/P] \le 3.07 \quad \cdots (a3)$$

$$0.01 \le [Al/P] \le 0.07 \quad \cdots (b3)$$

5. The solid electrolyte according to claim 1 or 2, represented by the following formula (1):

$$Li_a Al_b Zn_c PS_d N_e X_f Y_g \cdots \qquad (1)$$

   wherein, in the formula (1), X is a halogen element, and Y is an element other than a lithium element, an aluminum element, a zinc element, a phosphorus element, a sulfur element, a nitrogen element, and a halogen element, and a, b, c, d, e, f, and g are numerical values that give a stoichiometric ratio, a is a numerical value satisfying $3.00 \le a \le 4.00$, b is a numerical value satisfying $0.01 \le b \le 0.10$, c is a numerical value satisfying $0.00 \le c < 0.10$, d is a numerical value satisfying $3.50 \le d \le 4.50$, e is a numerical value satisfying $0.00 \le e \le 0.30$, f is a numerical value satisfying $0.10 \le f \le 1.00$, and g is a numerical value satisfying $0.00 \le g \le 0.04$.

6. The solid electrolyte according to claim 1, satisfying both of the following formulas (a4) and (b4).

$$2.94 \le [Li/P] \cdot [X/P] \le 3.05 \quad \cdots (a4)$$

$$0.01 \le [Al/P] \le 0.06 \quad \cdots (b4)$$

**7.** The solid electrolyte according to claim 1, satisfying both of the following formulas (a5) and (b5), both of the following formulas (a6) and (b6), or both of the following formulas (a7) and (b7).

$$3.05 < [\text{Li/P}] \cdot [\text{X/P}] \leq 3.15 \quad \cdots (\text{a5})$$

$$0.03 \leq [\text{Al/P}] \leq 0.08 \quad \cdots (\text{b5})$$

$$2.91 < [\text{Li/P}] \cdot [\text{X/P}] \leq 3.05 \quad \cdots (\text{a6})$$

$$0.01 \leq [\text{Al/P}] \leq 0.10 \quad \cdots (\text{b6})$$

$$2.84 < [\text{Li/P}] \cdot [\text{X/P}] \leq 2.91 \quad \cdots (\text{a7})$$

$$0.03 \leq [\text{Al/P}] \leq 0.08 \quad \cdots (\text{b7})$$

**8.** The solid electrolyte according to claim 1, satisfying both of the following formulas (a8) and (b8), both of the following formulas (a9) and (b9), or both of the following formulas (a10) and (b10).

$$3.00 < [\text{Li/P}] \cdot [\text{X/P}] \leq 3.15 \quad \cdots (\text{a8})$$

$$0.04 \leq [\text{Al/P}] \leq 0.07 \quad \cdots (\text{b8})$$

$$2.93 < [\text{Li/P}] \cdot [\text{X/P}] \leq 3.00 \quad \cdots (\text{a9})$$

$$0.01 \leq [\text{Al/P}] \leq 0.09 \quad \cdots (\text{b9})$$

$$2.84 < [\text{Li/P}] \cdot [\text{X/P}] \leq 2.93 \quad \cdots (\text{a10})$$

$$0.04 \leq [\text{Al/P}] \leq 0.07 \quad \cdots (\text{b10})$$

**9.** The solid electrolyte according to claim 1, satisfying both of the following formulas (a11) and (b11).

$$2.87 < [\text{Li/P}] \cdot [\text{X/P}] \leq 3.06 \quad \cdots (\text{a11})$$

$$0.03 \leq [\text{Al/P}] \leq 0.08 \quad \cdots (\text{b11})$$

**10.** The solid electrolyte according to claim 1, satisfying all of the following formulas (b12), (c12), and (d12).

$$0.01 \leq [\text{Al/P}] \leq 0.03 \quad \cdots (\text{b12})$$

$$[\text{Li/P}] \cdot [\text{X/P}] \leq 5.00 \times [\text{Al/P}] + 2.91 \quad \cdots (\text{c12})$$

$$[\text{Li/P}] \cdot [\text{X/P}] \geq \text{-}3.50 \times [\text{Al/P}] + 2.98 \quad \cdots (\text{d12})$$

**11.** The solid electrolyte according to claim 1, satisfying all of the following formulas (b13), (c13), and (d13).

$$0.03 \leq [\text{Al/P}] \leq 0.08 \quad \cdots (\text{b}13)$$

$$[\text{Li/P}] \cdot [\text{X/P}] \leq 3.50 \times [\text{Al/P}] + 2.96 \quad \cdots (\text{c}13)$$

$$[\text{Li/P}] \cdot [\text{X/P}] \leq \text{-}2.33 \times [\text{Al/P}] + 3.25 \quad \cdots (\text{d}13)$$

**12.** The solid electrolyte according to claim 1, satisfying both of the following formulas (a14) and (b14).

$$2.97 \leq [\text{Li/P}] \cdot [\text{X/P}] \leq 3.06 \quad \cdots (\text{a}14)$$

$$0.01 \leq [\text{Al/P}] \leq 0.05 \quad \cdots (\text{b}14)$$

**13.** The solid electrolyte according to claim 1, satisfying all of the following formulas (a15), (b15), and (c15).

$$2.97 \leq [\text{Li/P}] \cdot [\text{X/P}] \leq 3.06 \quad \cdots (\text{a}15)$$

$$0.01 \leq [\text{Al/P}] \leq 0.03 \quad \cdots (\text{b}15)$$

$$[\text{Li/P}] \cdot [\text{X/P}] \leq 5.00 \times [\text{Al/P}] + 2.91 \quad \cdots (\text{c}15)$$

**14.** The solid electrolyte according to claim 1, satisfying both of the following formulas (a16) and (b16).

$$2.97 \leq [\text{Li/P}] \cdot [\text{X/P}] \leq 3.06 \quad \cdots (\text{a}16)$$

$$0.03 \leq [\text{Al/P}] \leq 0.05 \quad \cdots (\text{b}16)$$

**15.** The solid electrolyte according to claim 1, comprising both a bromine element and an iodine element as halogen elements, wherein the molar ratio [Br/P] of the content of the bromine element to the content of the phosphorus element is 0.05 or more and 0.50 or less.

**16.** The solid electrolyte according to claim 1, comprising both a bromine element and an iodine element as halogen elements, wherein the molar ratio [I/P] of the content of the iodine element to the content of the phosphorus element is 0.05 or more and 0.50 or less.

**17.** The solid electrolyte according to claim 1, wherein the molar ratio [S/P] of the content of the sulfur element to the content of the phosphorus element is 3.50 or more and 4.50 or less.

**18.** The solid electrolyte according to claim 3, wherein the molar ratio [N/P] of the content of the nitrogen element to the content of the phosphorus element is 0.01 or more and 0.25 or less.

**19.** The solid electrolyte according to claim 1, further comprising

a zinc element,
wherein the molar ratio [Zn/P] of the content of the zinc element to the content of the phosphorus element is 0.001 or more and 0.05 or less.

**20.** The solid electrolyte according to claim 1, satisfying both of the following formulas (a17) and (b17).

$$2.97 \leq [\text{Li/P}] \cdot [\text{X/P}] \leq 3.06 \quad \cdots (\text{a}17)$$

$$0.05 \leq [\text{Al/P}] \leq 0.08 \quad \cdots (\text{b17})$$

**21.** The solid electrolyte according to claim 1, satisfying all of the following formulas (b18), (c18), and (d18).

$$0.01 \leq [\text{Al/P}] \leq 0.05 \quad \cdots (\text{b18})$$

$$[\text{Li/P}] \cdot [\text{X/P}] \geq \text{-}4.00 \times [\text{Al/P}] + 3.01 \quad \cdots (\text{c18})$$

$$[\text{Li/P}] \cdot [\text{X/P}] \geq 4.00 \times [\text{Al/P}] + 2.77 \quad \cdots (\text{d18})$$

**22.** The solid electrolyte according to claim 1, satisfying both of the following formulas (a19) and (b19).

$$2.97 \leq [\text{Li/P}] \cdot [\text{X/P}] \leq 3.15 \quad \cdots (\text{a19})$$

$$0.01 \leq [\text{Al/P}] \leq 0.08 \quad \cdots (\text{b19})$$

**23.** An energy storage device comprising the solid electrolyte according to any one of claims 1, 2, 6 to 17, and 19 to 22.

Fig. 1

Fig. 2

Fig. 3

## INTERNATIONAL SEARCH REPORT

| International application No. |
|---|
| **PCT/JP2023/030490** |

**A.   CLASSIFICATION OF SUBJECT MATTER**

*H01B 1/06*(2006.01)i; *C01B 25/455*(2006.01)i; *H01B 1/10*(2006.01)i; *H01G 11/56*(2013.01)i; *H01M 10/052*(2010.01)i; *H01M 10/0562*(2010.01)i

FI:   H01B1/06 A; H01M10/052; H01B1/10; C01B25/455; H01G11/56; H01M10/0562

According to International Patent Classification (IPC) or to both national classification and IPC

**B.   FIELDS SEARCHED**

Minimum documentation searched (classification system followed by classification symbols)

H01B1/06; C01B25/455; H01B1/10; H01G11/56; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | WO 2021/204922 A1 (BASF SE) 14 October 2021 (2021-10-14) claim 1, page 2, line 25 to page 3, line 5 | 1-2, 15-17, 21, 23 |
| A | | 3-14, 18-20, 22 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/030490**

| Patent document cited in search report | | | Publication date (day/month/year) | Patent family member(s) | Publication date (day/month/year) |
|---|---|---|---|---|---|
| WO | 2021/204922 | A1 | 14 October 2021 | US      2023/0150829      A1 claim 1, paragraphs [0016]-[0023] JP          2023-527647          A claim 1, paragraph [0008] CN          115443561          A KR  10-2023-0002573        A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005228570 A